# EUROPEAN PATENT APPLICATION

(11) **EP 4 796 677 A1**
(43) Date of publication of application: **26.08.2026**
(21) Application number: 24879857.1
(22) Date of filing: 21.10.2024
(51) Int. Cl.: C25D 5/50, C25D 5/26, H01M 50/119, H01M 50/124

(54) **NI-PLATED SURFACE-TREATED STEEL SHEET AND BATTERY CONTAINER**

(30) Priority: 20.10.2023 JP 2023181452
(71) Applicant: Toyo Kohan Co., Ltd., Tokyo 141-8260 (JP)
(72) Inventor: OBATA, Shunki, Kudamatsu-shi, Yamaguchi 744-8611 (JP); YOSHIOKA, Koh, Kudamatsu-shi, Yamaguchi 744-8611 (JP); UEHARA, Kaori, Kudamatsu-shi, Yamaguchi 744-8611 (JP); MATSUSHIGE, Daisuke, Kudamatsu-shi, Yamaguchi 744-8611 (JP)
(74) Representative: Kraus & Lederer PartGmbB
(86) International application number: PCT/JP2024/037449
(87) International publication number: WO 2025/084437

(57) **Abstract**

Provided is a Ni-plated surface-treated steel sheet comprising a steel sheet, and an Fe-Ni-Cu-Cr layer formed on at least one surface of the steel sheet, wherein when Cu intensity is continuously measured depthwise from the surface of the Fe-Ni-Cu-Cr layer by radio frequency glow discharge optical emission spectrometry (GDS), a ratio IR_{Cu-0.1d} of a Cu intensity In_{Cu-0.1d} at a depth of 0.1 µm from the surface to a Cu intensity In_{Cu-steel} in the steel sheet is 0.5 or more and less than 3.0.

## Description

### TECHNICAL FIELD

The present invention relates to a Ni-plated surface-treated steel sheet and a battery container.

### BACKGROUND ART

Traditionally, Ni-plated steel sheets containing Ni are broadly used as a material for battery containers. Patent Document 1 discloses a Ni-plated steel sheet for a battery container comprising an Fe-Ni diffusion layer formed by forming a nickel-plating layer on a steel sheet and then performing a thermal diffusion treatment thereon to prevent occurrence of pitting corrosion or solution leakage, wherein the ratio of Ni to Fe in the outermost layer is controlled.

### RELATED ART DOCUMENT

### PATENT DOCUMENT

Patent Document 1: JP 2014-47359 A

### SUMMARY OF THE INVENTION

### PROBLEM TO BE SOLVED BY THE INVENTION

However, accompanying an increase in capacity of the battery, the battery container including the Ni-plated steel sheet disclosed in Patent Document 1 has the following problem: When abnormality of the battery management system causes overdischarge, in some cases, the potential of the Fe-Ni diffusion layer becomes closer to the potential of the positive electrode; as a result, iron may be eluted from the Fe-Ni diffusion layer to the electrolyte solution and the inner wall of the battery container may be corroded. It is expected that the potential of the positive electrode is further increased hereafter with an increase in capacity of the battery, and a Ni-plated steel sheet having high electrolyte solution resistance during overdischarge is demanded.

An object of the present invention is to provide a Ni-plated surface-treated steel sheet having high electrolyte solution resistance during overdischarge.

### MEANS FOR SOLVING PROBLEMS

The present inventors, who have conducted extensive research to achieve the above object, have found that the above object can be achieved by forming an Fe-Ni-Cu-Cr layer on a Ni-plated surface-treated steel sheet, and have completed the present invention.
[1] Aspect 1 according to the present invention provides a Ni-plated surface-treated steel sheet comprising a steel sheet and an Fe-Ni-Cu-Cr layer formed on at least one surface of the steel sheet, wherein when Cu intensity is continuously measured depthwise from the surface of the Fe-Ni-Cu-Cr layer by radio frequency glow discharge optical emission spectrometry (GDS), a ratio IR_{Cu-0.1d} of a Cu intensity In_{Cu-0.1d} at a depth of 0.1 µm from the surface to a Cu intensity In_{Cu-steel} in the steel sheet is 0.5 or more and less than 3.0.
[2] Aspect 2 according to the present invention provides the Ni-plated surface-treated steel sheet according to aspect 1, wherein when Cu intensity is continuously measured depthwise from the surface of the Fe-Ni-Cu-Cr layer by radio frequency glow discharge optical emission spectrometry (GDS), a ratio IR_{Cu-0.5d} of a Cu intensity In_{Cu-0.5d} at a depth of 0.5 µm from the surface to the Cu intensity In_{Cu-steel} in the steel sheet is 0.5 or more and less than 3.0.
[3] Aspect 3 according to the present invention provides the Ni-plated surface-treated steel sheet according to aspect 1 or 2, wherein when Cr intensity is continuously measured depthwise from the surface of the Fe-Ni-Cu-Cr layer by radio frequency glow discharge optical emission spectrometry (GDS), a ratio IR_{Cr-0.5d} of a Cr intensity In_{Cr-0.5d} at a depth of 0.5 µm from the surface to a Cr intensity In_{Cr-steel} in the steel sheet is 0.2 or more and less than 2.0.
[4] An aspect 4 according to the present invention provides the Ni-plated surface-treated steel sheet according to any one of aspects 1 to 3, wherein when Cr intensity is continuously measured depthwise from the surface of the Fe-Ni-Cu-Cr layer by radio frequency glow discharge optical emission spectrometry (GDS), a ratio IR_{Cr-0.1d} of a Cr intensity In_{Cr-0.1d} at a depth of 0.1 µm from the surface to the Cr intensity In_{Cr-steel} in the steel sheet is 0.2 or more and less than 2.0.
[5] Aspect 5 according to the present invention provides the Ni-plated surface-treated steel sheet according to any one of aspects 1 to 4, wherein when Cu intensity is continuously measured depthwise from the surface of the Fe-Ni-Cu-Cr layer by radio frequency glow discharge optical emission spectrometry (GDS), a ratio IR_{Cu-0.3d to 0.7d} of a Cu intensity In_{Cu-0.3d to 0.7d} at a depth from 0.3 to 0.7 µm from the surface to the Cu intensity In_{Cu-steel} in the steel sheet is 0.5 or more and 3.0 or less.
[6] Aspect 6 according to the present invention provides the Ni-plated surface-treated steel sheet according to any one of aspects 1 to 5, wherein the Fe-Ni-Cu-Cr layer has a Cu-enriched region.
[7] Aspect 7 according to the present invention provides the Ni-plated surface-treated steel sheet according to any one of aspects 1 to 6, wherein when Cu intensity is continuously measured depthwise from the surface of the Fe-Ni-Cu-Cr layer by radio frequency glow discharge optical emission spectrometry (GDS), a ratio IR_{Cu-MAX} of a maximum Cu intensity In_{MAX} at a depth up to the steel sheet to the Cu intensity In_{Cu-steel} in the steel sheet is more than 0.8 and 3.0 or less.
[8] Aspect 8 according to the present invention provides the Ni-plated surface-treated steel sheet according to one any of aspects 1 to 7, wherein the steel sheet is a low-carbon steel or an extremely low-carbon steel.
[9] Aspect 9 according to the present invention provides the Ni-plated surface-treated steel sheet according to any one of aspects 1 to 8, wherein the steel sheet is a low-carbon steel, the content of Cu in the steel sheet is 0.01% by weight to 1.0% by weight, and the content of Cr in the steel sheet is 0.01% by weight to 1.0% by weight.
[10] Aspect 10 according to the present invention provides a battery container comprising the Ni-plated surface-treated steel sheet according to any one of aspects 1 to 9.

### EFFECTS OF THE INVENTION

The present invention provides a Ni-plated surface-treated steel sheet which can suppress elution of a metal such as iron (Fe) to an electrolyte solution during overdischarge and have high electrolyte solution resistance.

### BRIEF DESCRIPTION OF DRAWINGS

[Fig. 1] Fig. 1 is a schematic cross-sectional view showing a configuration of a Ni-plated surface-treated steel sheet according to an embodiment of the present invention.
[Fig. 2] Fig. 2 is an example of a temperature profile of a thermal diffusion treatment on a plated steel sheet for illustrating a method of calculating the thermal history Y in the thermal diffusion treatment.
[Fig. 3] Fig. 3(a) is a chart obtained by radio frequency glow discharge optical emission spectrometry in Example 1, and Fig. 3(b) is an enlarged view of the chart obtained by radio frequency glow discharge optical emission spectrometry in Example 1.
[Fig. 4] Fig. 4(a) is a chart obtained by radio frequency glow discharge optical emission spectrometry in Example 2, and Fig. 4(b) is an enlarged view of the chart obtained by radio frequency glow discharge optical emission spectrometry in Example 2.
[Fig. 5] Fig. 5(a) is a chart obtained by radio frequency glow discharge optical emission spectrometry in Comparative Example 1, and Fig. 5(b) is an enlarged view of the chart obtained by radio frequency glow discharge optical emission spectrometry in Comparative Example 1.
[Fig. 6] Fig. 6 is a schematic view showing a measurement jig used in evaluation of the electrolyte solution resistance of the Ni-plated surface-treated steel sheet by an LSV method.

### DESCRIPTION OF EMBODIMENTS

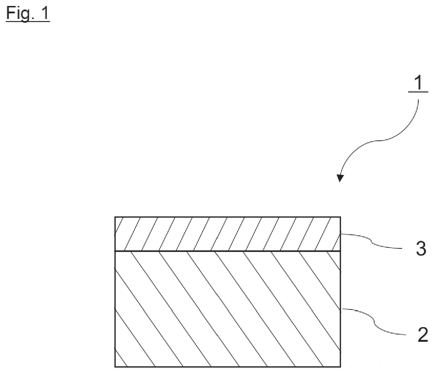

Fig. 1 is a schematic cross-sectional view showing a configuration of a Ni-plated surface-treated steel sheet according to the present embodiment. As shown in Fig. 1, the Ni-plated surface-treated steel sheet 1 according to the present embodiment comprises a steel sheet 2 formed from a carbon steel, and an Fe-Ni-Cu-Cr layer 3 formed on at least one surface of the steel sheet 2

The steel sheet 2, which is the substrate of the Ni-plated surface-treated steel sheet 1, is formed from a carbon steel. The carbon steel used in the steel sheet 2 can be any carbon steel as long as it has high shape-processability, and is not particularly limited. For example, low-carbon steel (carbon content: 0.01% by weight to 0.15% by weight), such as low carbon aluminum-killed steel, in which the carbon content is controlled by aluminum during production of steel, extremely low-carbon steel having a carbon content of less than 0.01% by weight, or non-aging extremely low-carbon steel prepared by adding Ti or Nb to such extremely low-carbon steel can be used.

Among these, as the steel sheet 2, an original plate formed from a carbon steel containing a predetermined amount of Cu and a predetermined amount of Cr can be suitably used because the Fe-Ni-Cu-Cr layer 3 can be formed by diffusing Cu and Cr in the original plate used as the steel sheet 2 into Ni-plating. The content of Cu in the steel sheet 2 is preferably 0.01% by weight to 1.0% by weight. From the viewpoint of being capable of increasing the Cu content in the Fe-Ni-Cu-Cr layer 3 to further suppress metal elution, the content of Cu in the steel sheet 2 is more preferably 0.05% by weight to 1.0% by weight, still more preferably 0.05% by weight to 0.5% by weight, particularly preferably 0.1% by weight to 0.4% by weight. To be noted, when the surface-treated steel sheet 1 is used in a cylindrical container or the like accompanied by deep drawing or the like in molding thereof, the content of Cu in the steel sheet 2 is preferably 0.05% by weight to 0.4% by weight.

The content of Cr in the steel sheet 2 is preferably 0.01% by weight to 1.0% by weight. From the viewpoint of being capable of increasing the Cr content in the Fe-Ni-Cu-Cr layer 3 to further suppress metal elution, the content of Cr in the steel sheet 2 is more preferably 0.03% by weight to 1.0% by weight. From the viewpoint of suppressing a reduction in electric conductivity on the surface of the Fe-Ni-Cu-Cr layer 3 and suppressing metal elution, the content of Cr in the steel sheet 2 is still more preferably 0.03% by weight to 0.5% by weight, particularly preferably 0.03% by weight to 0.4% by weight. Examples of a method of controlling the contents of Cu and Cr in the steel sheet 2 include, but should not be limited to, a method of using a steel material produced from a raw material including iron scrap of carbon steel and iron scrap containing SUS and a Cu wire, as the original plate for the steel sheet 2; and the like.

In the present embodiment, the following can also be used as the original plate for the steel sheet 2: those obtained by pickling a hot-rolled plate of carbon steel to remove scale (oxidized film) on the surface thereof, and cold rolling the plate, followed by electrolytic cleaning such as alkaline electrolytic degreasing and then annealing and/or temper rolling; those obtained by cold rolling a hot-rolled plate of carbon steel, and electrolytic cleaning the plate without performing either annealing or temper rolling; and the like. From the viewpoint of productivity, a continuous steel strip is preferably used as the steel sheet 2. The hot-rolled plate may be produced using a blast furnace, or may be produced using an electric furnace.

In the present embodiment, although the content of Cu and that of Cr near the boundary between the Fe-Ni-Cu-Cr layer 3 and the steel sheet 2 are reduced due to diffusion of Fe, Cu, and Cr on the surface of the original plate for the steel sheet 2 in the thermal diffusion treatment step described later, the region in which the content of Cu and that of Cr are reduced is only a small portion of the total thickness of the steel sheet 2, and hardly affects the proportions of the components in the entire steel sheet 2. For this reason, the content of Cu and that of Cr in the steel sheet 2 can be regarded as the same as the content of Cu and that of Cr in the original plate without any problems. The same also applies to the components other than Cu and Cr, and the proportions of the components in the original plate for the steel sheet 2 can be regarded as about the same as the proportions of the components in the steel sheet 2 before and after the thermal diffusion treatment step. In other words, like the steel sheet 2, the original plate for the steel sheet 2 can be any carbon steel as long as it has high moldability, and is not particularly limited. For example, low-carbon steel (carbon content: 0.01% by weight to 0.15% by weight), such as low carbon aluminum-killed steel, in which the carbon content is controlled by aluminum during production of steel, extremely low-carbon steel having a carbon content of less than 0.01% by weight, or non-aging extremely low-carbon steel prepared by adding Ti or Nb to such extremely low-carbon steel can be used. From the viewpoint of diffusing Cu and Cr in the original plate into Ni-plating to form the Fe-Ni-Cu-Cr layer 3, an original plate formed from a carbon steel containing a predetermined amount of Cu and a predetermined amount of Cr can be suitably used.

The thickness of the steel sheet 2 may be appropriately selected according to the application of the Ni-plated surface-treated steel sheet 1, and is not particularly limited. To reduce production cost, the thickness is preferably 1.5 mm or less, more preferably 1.25 mm or less, still more preferably 0.9 mm or less. To improve the mechanical properties of the Ni-plated surface-treated steel sheet 1, the thickness of the steel sheet 2 is preferably 0.03 mm or more, more preferably 0.1 mm or more, still more preferably, 0.15 mm or more, particularly preferably 0.2 mm or more.

The Ni-plated surface-treated steel sheet 1 according to the present embodiment includes an Fe-Ni-Cu-Cr layer 3 on the steel sheet 2. The Fe-Ni-Cu-Cr layer 3 is a layer formed by forming a Ni-plating layer on the steel sheet 2, and then, performing a thermal diffusion treatment on the steel sheet 2 including the Ni-plating layer formed thereon to thermally diffuse iron (Fe), copper (Cu), and chromium (Cr) contained in the steel sheet 2 and nickel (Ni) contained in the Ni-plating layer. It is sufficient that the Fe-Ni-Cu-Cr layer 3 is formed on at least one surface of the steel sheet 2, and the Fe-Ni-Cu-Cr layer 3 may be formed on both surfaces of the steel sheet 2. The Ni-plated surface-treated steel sheet 1 according to the present embodiment includes the Fe-Ni-Cu-Cr layer 3, and thus has high electrolyte solution resistance during overdischarge.

The fact that the Ni-plated surface-treated steel sheet 1 includes the Fe-Ni-Cu-Cr layer 3 can be verified by performing elemental analysis on the surface layer of the Ni-plated surface-treated steel sheet 1, specifically, by performing compositional analysis of the surface by radio frequency glow discharge optical emission spectrometry (GDS), Auger electron spectrometry (AES), X-ray photoelectron spectrometry (XPS), or the like. For example, radio frequency glow discharge optical emission spectrometry is performed on a standard sample including a low-carbon steel and a Ni-plating layer formed thereon and the Ni-plated surface-treated steel sheet 1 in the depth direction from their surface toward the steel sheet 2, and changes in Fe intensity, Ni intensity, Cu intensity, and Cr intensity relative to the measurement time are continuously measured. When the intensities of the standard sample are compared to those of the Ni-plated surface-treated steel sheet 1 in the obtained data, it can be determined that Fe is present in a region in which the Fe intensity of the Ni-plated surface-treated steel sheet 1 is 10% or more of the maximum value of the Fe intensity of the standard sample. Likewise, it can be determined that Ni is present in a region in which the Ni intensity of the Ni-plated surface-treated steel sheet 1 is 10% or more of the maximum value of the Ni intensity of the standard sample. It can be determined that if the Cu intensity at a certain depth position in the Ni-plated surface-treated steel sheet 1 is higher than the Cu intensity at the same depth position in the Ni-plating layer of the standard sample as the depth position in the Ni-plated surface-treated steel sheet 1, Cu is present at the depth position. Likewise, it can be determined that if the Cr intensity at a certain depth position in the Ni-plated surface-treated steel sheet 1 is higher than the Cr intensity at the same depth position in the Ni-plating layer of the standard sample as the depth position in the Ni-plated surface-treated steel sheet 1, Cr is present at the depth position. When there is a position where it is determined that Fe, Ni, Cu, and Cr are all present, it can be determined that the Fe-Ni-Cu-Cr layer 3 is formed in that position. The standard sample will be described later in detail.

To be noted, Cu and Cr in the Fe-Ni-Cu-Cr layer 3 are diffused from the original plate used as the steel sheet 2, and thus, the proportions of Cu and Cr present in the Fe-Ni-Cu-Cr layer 3 are extremely smaller than those of Fe and Ni. In other words, the proportions of Fe and Ni are dominant in the metal composition of the Fe-Ni-Cu-Cr layer 3. Specifically, the proportions of Cu and Cr contained in the Fe-Ni-Cu-Cr layer 3 are nearly equal to or less than the proportions of Cu and Cr contained in the steel sheet 2. Thus, the total amount of Cu and Cr is 2% by weight or less, and the total amount of iron and nickel is 98% by weight or more.

It is sufficient that the Ni-plated surface-treated steel sheet 1 includes the Fe-Ni-Cu-Cr layer 3. Preferably, a ratio IR_{Cu-0.5d} (= In_{Cu-0.5d}/In_{Cu-Steel}) of a Cu intensity In_{Cu-0.5d} at a depth of 0.5 µm from the surface to a Cu intensity In_{Cu-steel} in the steel sheet 2 measured by radio frequency glow discharge optical emission spectrometry is 0.50 or more and less than 3.0. When the Cu intensity ratio IR_{Cu-0.5d} falls within these ranges above, the Ni-plated surface-treated steel sheet 1 can have higher electrolyte solution resistance during overdischarge. Although the reason is not clarified, it is considered that this is because the surface layer of the Fe-Ni-Cu-Cr layer 3 can have a mixed potential, and local dissolution of the surface layer in contact with the electrolyte solution can be suppressed. If the amount of Cu in the vicinity of the surface layer is too small, the number of crystal grains containing Cu in the surface layer of the Fe-Ni-Cu-Cr layer 3 is decreased or the region where Cu is present is reduced, which may lead to a possibility that a state of a sufficient mixed potential cannot be formed. If the amount of Cu in the vicinity of the surface layer is too large, a region where the potential becomes locally noble in the Fe-Ni-Cu-Cr layer 3 is generated to increase the difference in potential between Cu and Fe, which may increase elution of a metal such as iron. To further suppress the elution of a metal such as iron during overdischarge, the lower limit of the intensity ratio IR_{Cu-0.5d} is more preferably 0.7 or more, still more preferably 0.8 or more, and the upper limit of the intensity ratio IR_{Cu-0.5d} is more preferably 2.5 or less, still more preferably 2.0 or less, particularly preferably 1.8 or less. A method of determining the Cu intensity In_{Cu-steel} in the steel sheet 2 will be described later in detail. In particular, when the amount of Ni deposited is relatively small, control of the intensity ratio IR_{Cu-0.5d} within these ranges above is important for an improvement in electrolyte solution resistance during overdischarge.

The intensities of the elements at the respective depth positions in radio frequency glow discharge optical emission spectrometry can be each determined by determining the depth from the sample surface through calculation using the measurement time (etching time) and the etching rate (unit: µm/sec) by sputtering, and reading the intensity at the position. In the present embodiment, the measurement time is converted into the measurement depth using the Ni etching rate. Specifically, the method of converting the measurement time to the measurement depth is shown below.

Initially, the Ni etching rate is determined. To determine the Ni etching rate, a standard sample including a Ni-plated steel sheet having a known thickness (or deposited amount) of the plating layer and not subjected to a heat treatment is prepared. For example, a standard Ni-plated steel sheet including a low-carbon steel sheet having a thickness of 0.3 mm on which non-glossy Ni-plating with a thickness of 1.1 µm is formed is prepared. The plating treatment for applying non-glossy Ni-plating to the standard Ni-plated steel sheet is not particularly limited, and can be performed using a Watts bath described below, for example.

### <Conditions for Ni-plating>

bath composition: 250 g/L of nickel sulfate hexahydrate, 45 g/L of nickel chloride hexahydrate, 30 g/L of boric acid
pH: 4.0 to 5.0
bath temperature: 60°C
current density: 10 A/dm²

The thickness of Ni-plating on the standard Ni-plated steel sheet can be determined by measurement of the thickness through SEM observation of a cross-section of the steel sheet on which the Ni-plating layer is formed, or by determining the amount of Ni deposited by X-ray fluorescence analysis and converting the amount to the thickness with the specific gravity of Ni. Using a radio frequency glow discharge optical emission spectrometer, this standard sample is measured for Fe intensity and Ni intensity in the standard Ni-plated steel sheet from the side thereof including Ni-plating until the Fe intensity becomes saturated, and a chart is obtained. From the resulting chart, the time of etching the Ni-plating layer is determined. Specifically, the time from the start of measurement to a time when the Fe intensity reaches 10% of the saturated value thereof is defined as the etching time for Ni. The Ni etching rate can be determined from the etching time for Ni and the thickness of the Ni-plating layer. The saturated value of the Fe intensity is determined from the rate of change in Fe intensity with respect to time (change in Fe intensity/sec). The rate of change in Fe intensity with respect to time sharply increases when Fe is detected after the start of the measurement, and decreases after the intensity reaches the maximum value, and then is steady near zero. The value of the Fe intensity when the rate of change in Fe intensity with respect to time remains steady near zero is the saturated value of the Fe intensity. Specifically, when the rate of change in Fe intensity with respect to time is 0.02 or less (Fe intensity/sec), the Fe intensity can be regarded as the saturated value.

The Ni etching rate determined as above is a parameter representing the relation between the depth time determined by measurement of the steel sheet with a radio frequency glow discharge optical emission spectrometer where the steel sheet includes the Ni-plating layer formed thereon with a known thickness of Ni-plating and is not subjected to a thermal diffusion treatment (measurement time with the radio frequency glow discharge optical emission spectrometer) and the actual thickness. Thus, using the Ni etching rate determined as above, the measurement time by radio frequency glow discharge optical emission spectrometry performed on the Ni-plated surface-treated steel sheet 1 can be converted to the etching depth (thickness). To be noted, it is known that the iron etching rate and the nickel etching rate are about the same in the measurement using a radio frequency glow discharge optical emission spectrometer. The copper and chromium contained in the Fe-Ni-Cu-Cr layer 3 are those diffused from the carbon steel original plate serving as the substrate. Thus, the amount of copper and chromium contained in the Fe-Ni-Cu-Cr layer 3 is very small, and such copper and chromium hardly affect the etching rate. Accordingly, iron and nickel dominantly affect the etching rate of the Fe-Ni-Cu-Cr layer 3, and the Ni etching rate determined using a pure Ni-plating layer can be used as the etching rate of the Fe-Ni-Cu-Cr layer 3 and that of the steel sheet 2.

For example, the Cu intensity In_{Cu-0.5d} at a depth of 0.5 µm from the surface can be determined by reading the Cu intensity where the product of the Ni etching rate and the measurement time is 0.5 µm. Since the intensity at a depth exactly corresponding to the target value cannot be always obtained depending on the etching rate, it is sufficient that the intensity within the range of the target value ±0.03 µm is read. For example, the intensity within the range of 0.5 µm ±0.03 µm can be considered as the intensity at a depth of 0.5 µm. The Cu intensity at a depth other than the depth of 0.5 µm described later can be read by the same method.

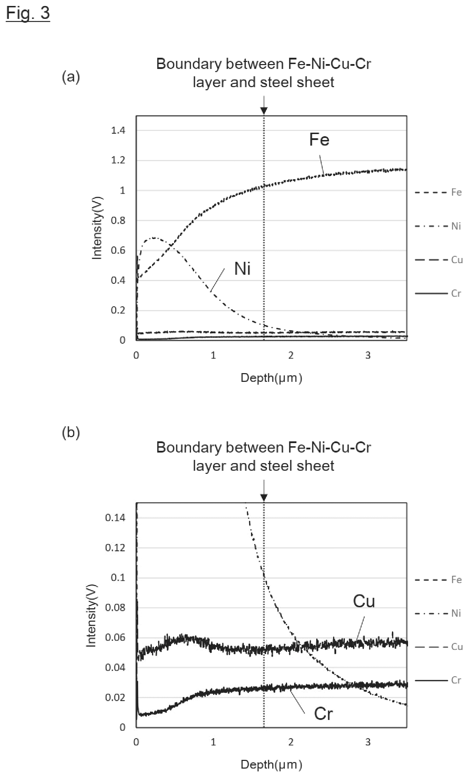

In radio frequency glow discharge optical emission spectrometry, the measurement is continuously performed depthwise from the surface of a sample. Thus, when radio frequency glow discharge optical emission spectrometry is performed on the Ni-plated surface-treated steel sheet 1 according to the present embodiment, data as shown in Fig. 3(a) is obtained, the data showing changes in the Fe intensity, the Ni intensity, the Cu intensity, and the Cr intensity, in which the depth change amounts (change amount over time) of the Fe intensity, the Ni intensity, the Cu intensity, and the Cr intensity all approach near 0 with time, and particularly the Fe intensity become almost saturated. The Ni-plated surface-treated steel sheet 1 has a structure composed of a laminate of the Fe-Ni-Cu-Cr layer 3 and the steel sheet 2, and the steel sheet 2 usually contains the metals in fixed concentrations in the depth direction. Accordingly, the intensity data at such a point where the depth change amount is near 0 represents intensity data of each metal in the steel sheet 2. In comparison between the results obtained by radio frequency glow discharge optical emission spectrometry performed on the Ni-plated surface-treated steel sheet 1 according to the present embodiment and the standard sample, the results of measurement of the Ni-plated surface-treated steel sheet 1 show that the depth change amounts in the intensity data of the metals are near 0 at a depth where the Ni intensity of the Ni-plated surface-treated steel sheet 1 is 2% of the maximum value of the Ni intensity of the standard sample (hereinafter, also referred to as D_{Ni2%}). For this reason, in the present embodiment, the intensities of the metals at a depth D_{Ni2%} in the results obtained from radio frequency glow discharge optical emission spectrometry performed on the Ni-plated surface-treated steel sheet 1 are used as data of the intensities of the metals in the steel sheet 2. In other words, the Cu intensity In_{Cu-steel} in the steel sheet 2 described above can be determined as the Cu intensity at the depth D_{Ni2%}. The same applies to chromium, and the Cr intensity In_{Cr-steel} can be determined as the Cr intensity at the depth D_{Ni2%}. Fig. 3(a) is a chart obtained by radio frequency glow discharge optical emission spectrometry in Example 1 described later.

In the present embodiment, the position corresponding to the boundary between the Fe-Ni-Cu-Cr layer 3 and the steel sheet 2 as the substrate is defined as a position in which the Ni intensity measured in the Ni-plated surface-treated steel sheet 1 is 10% of the maximum value of the Ni intensity of the standard sample measured under the same conditions, and the depth at this time is considered as the thickness of the Fe-Ni-Cu-Cr layer 3. The thickness of the Fe-Ni-Cu-Cr layer 3 is preferably 0.5 to 3.5 µm, more preferably 0.7 to 3.0 µm.

The ratio (IR_{Cu-0.5d} = In_{Cu-0.5d}/In_{Cu-Steel}) of the Cu intensity In_{Cu-0.5d} at a depth of 0.5 µm from the surface to the Cu intensity In_{Cu-steel} in the steel sheet 2 thus obtained represents the ratio of the Cu intensity in the vicinity of the surface layer of the Fe-Ni-Cu-Cr layer 3 to the Cu intensity in the steel sheet 2, and is an index representing how much Cu in the steel sheet 2 diffuses into the surface layer.

In the Ni-plated surface-treated steel sheet 1, the ratio IR_{Cu-0.1d} (= In_{Cu-0.1d}/In_{Cu-steel}) of the Cu intensity In_{Cu-0.1d} at a depth of 0.1 µm from the surface to the Cu intensity In_{Cu-steel} in the steel sheet 2 measured by radio frequency glow discharge optical emission spectrometry (GDS) is 0.50 or more and less than 3.0. The Cu intensity ratio IR_{Cu-0.1d} represents the ratio of the Cu intensity near the outermost surface of the Fe-Ni-Cu-Cr layer 3 to the Cu intensity in the steel sheet 2, and is an index how much Cu in the steel sheet 2 diffuses into the vicinity of the outermost surface. If the amount of Cu near the outermost surface is too small, the number of crystal grains containing Cu in the outermost surface of the Fe-Ni-Cu-Cr layer 3 is decreased or the region where Cu is present is reduced, which may lead to a possibility that a state of a sufficient mixed potential cannot be formed. If the amount of Cu near the outermost surface is too large, this may increase elution of a metal. To further suppress the elution of a metal during overdischarge, the lower limit of the intensity ratio IR_{Cu-0.1d} is preferably 0.6 or more, more preferably 0.7 or more, particularly preferably 0.8 or more. The upper limit of the intensity ratio IR_{Cu-0.1d} is preferably 2.0 or less, more preferably 1.5 or less, particularly preferably less than 1.0. When the Cu intensity ratio IR_{Cu-0.1d} falls within these ranges above, the Ni-plated surface-treated steel sheet 1 can have higher electrolyte solution resistance during overdischarge. In particular, even if the amount of Ni deposited is relatively small, control of the intensity ratio IR_{Cu-0.1d} within these ranges above can provide a Ni-plated surface-treated steel sheet 1 having high electrolyte solution resistance during overdischarge.

In the Ni-plated surface-treated steel sheet 1, the ratio IR_{Cu-0.3d} (= In_{Cu-0.3d}/In_{Cu-steel}) of the Cu intensity In_{Cu-0.3d} at a depth of 0.3 µm from the surface to the Cu intensity In_{Cu-steel} in the steel sheet 2 measured by radio frequency glow discharge optical emission spectrometry is preferably 0.50 or more and less than 3.0. To further suppress the elution of a metal during overdischarge, the lower limit of the intensity ratio IR_{Cu-0.3d} is more preferably 0.7 or more, still more preferably 0.8 or more, particularly preferably 0.9 or more. The upper limit of the intensity ratio IR_{Cu-0.3d} is more preferably 2.5 or less, still more preferably 2.0 or less, particularly preferably 1.8 or less. When the Cu intensity ratio IR_{Cu-0.3d} falls within these ranges above, the Ni-plated surface-treated steel sheet 1 can have higher electrolyte solution resistance during overdischarge. In particular, even if the amount of Ni deposited is relatively small, control of the intensity ratio IR_{Cu-0.3d} within these ranges above can provide a Ni-plated surface-treated steel sheet 1 having higher electrolyte solution resistance during overdischarge.

In the Ni-plated surface-treated steel sheet 1, the ratio IR_{Cu-0.7d} (= In_{Cu-0.7d}/In_{Cu-steel}) of the Cu intensity In_{Cu-0.7d} at a depth of 0.7 µm from the surface to the Cu intensity In_{Cu-steel} in the steel sheet 2 measured by radio frequency glow discharge optical emission spectrometry is preferably 0.50 or more and less than 3.0. To further suppress the elution of a metal during overdischarge, the lower limit of the intensity ratio IR_{Cu-0.7d} is more preferably 0.7 or more, still more preferably 0.8 or more, particularly preferably 0.9 or more. The upper limit of the intensity ratio IR_{Cu-0.7d} is more preferably 2.5 or less, still more preferably 2.0 or less, particularly preferably 1.8 or less. When the Cu intensity ratio IR_{Cu-0.7d} falls within these ranges above, the Ni-plated surface-treated steel sheet 1 can have higher electrolyte solution resistance during overdischarge.

In the Ni-plated surface-treated steel sheet 1, the ratio IR_{Cu-0.9d} (= In_{Cu-0.9d}/In_{Cu-steel}) of the Cu intensity In_{Cu-0.9d} at a depth of 0.9 µm from the surface to the Cu intensity In_{Cu-steel} in the steel sheet 2 measured by radio frequency glow discharge optical emission spectrometry is preferably 0.50 or more and less than 3.0. To further suppress the elution of a metal during overdischarge, the lower limit of the intensity ratio IR_{Cu-0.9d} is more preferably 0.7 or more, still more preferably 0.8 or more, particularly preferably 0.9 or more. The upper limit of the intensity ratio IR_{Cu-0.9d} is more preferably 2.5 or less, still more preferably 2.0 or less, particularly preferably 1.8 or less. When the Cu intensity ratio IR_{Cu-0.9d} falls within these ranges above, the Ni-plated surface-treated steel sheet 1 can have higher electrolyte solution resistance during overdischarge.

In the Ni-plated surface-treated steel sheet 1, the ratio IR_{Cu-MAX} (= In_{Cu-MAX}/In_{Cu-steel}) of the maximum value of Cu intensity In_{Cu-MAX} in a region from the surface to the boundary between the Fe-Ni-Cu-Cr layer 3 and the steel sheet 2 to the Cu intensity In_{Cu-steel} in the steel sheet 2 measured by radio frequency glow discharge optical emission spectrometry is preferably more than 0.8 and 3.0 or less. To further suppress the elution of a metal during overdischarge, the IR_{Cu-MAX} is more preferably 0.9 or more and 2.5 or less, still more preferably 0.9 or more and 2.0 or less, particularly preferably 1.0 or more and 1.8 or less. When the Cu intensity ratio IR_{Cu-MAX} falls within these ranges above, the Ni-plated surface-treated steel sheet 1 can have higher electrolyte solution resistance during overdischarge.

In the Ni-plated surface-treated steel sheet 1, the ratio IR_{Cu-0.3d} to _{0.7d} (= In_{Cu-0.3d} to _{0.7d}/In_{Cu-steel}) of the Cu intensity In_{Cu-0.3d} to _{0.7d} in a region from the surface to a depth from 0.3 µm to 0.7 µm (that is, Cu intensity measured in any depth position in a region from the surface to a depth from 0.3 µm to 0.7 µm) to the Cu intensity In_{Cu-steel} in the steel sheet 2 measured by radio frequency glow discharge optical emission spectrometry is preferably 0.5 or more and 3.0 or less. When the Cu intensity ratio IR_{Cu-0.3d to 0.7d} falls within these ranges above, a fluctuation in proportion of the Cu content in the depth direction of the Fe-Ni-Cu-Cr layer can be suppressed, and a state of a mixed potential can be more stably formed, resulting in a suppression in elution of a metal during overdischarge. To further suppress the elution of a metal during overdischarge by causing a Cu-containing region to be stably present not only in a specific depth position but also in the depth direction in the vicinity of the surface layer, the lower limit of the intensity ratio IR_{Cu-0.3d to 0.7d} is more preferably 0.7 or more, still more preferably 0.8 or more, particularly preferably 0.9 or more. The upper limit of the intensity ratio IR_{Cu-0.3d to 0.7d} is more preferably 2.5 or less, still more preferably 2.0 or less, particularly preferably 1.8 or less. When the Cu intensity ratio IR_{Cu-0.3d to 0.7d} falls within these ranges above, the Ni-plated surface-treated steel sheet 1 can have higher electrolyte solution resistance during overdischarge.

Preferably, the Fe-Ni-Cu-Cr layer 3 has a Cu-enriched region formed in an intermediate region (that is, a region deeper than the outermost surface of the Ni-plated surface-treated steel sheet 1 and shallower than the boundary between the Fe-Ni-Cu-Cr layer 3 and the steel sheet 2). The fact that the Fe-Ni-Cu-Cr layer 3 has a Cu-enriched region can be verified from Expressions (1) and (2) below, for example, using the Cu intensity In_{Cu-boundary} in a position corresponding to the boundary between the Fe-Ni-Cu-Cr layer 3 and the steel sheet 2 as the substrate and the intensity ratio IR_{Cu-boundary} (= In_{Cu-boundary}/In_{Cu-steel}) of the Cu intensity In_{Cu-boundary} to the Cu intensity In_{Cu-steel} in the steel sheet 2. When the Expressions (1) and (2) below are satisfied, it can be determined that the Fe-Ni-Cu-Cr layer 3 has a Cu-enriched region in the intermediate region. In this case, the position in which the Cu intensity reaches the maximum value is preferably between the position from the surface to a depth of 0.3 µm and a position 0.1 µm shallower than the position corresponding to the boundary between the Fe-Ni-Cu-Cr layer 3 and the steel sheet 2 as the substrate. Moreover, the position in which the Cu intensity reaches the maximum value is preferably a position in which the depth from the surface corresponds to 60% or less of the thickness of the Fe-Ni-Cu-Cr layer 3. By forming the Cu-enriched region in the intermediate region of the Fe-Ni-Cu-Cr layer 3, the Ni-plated surface-treated steel sheet 1 can have higher electrolyte solution resistance during overdischarge. ${IR}_{Cu - MAX} - {IR}_{Cu - 0.1 d} > 0.05$ ${IR}_{Cu - MAX} - {IR}_{Cu - boundary} > 0.05$

In the Ni-plated surface-treated steel sheet 1, the ratio IR_{Cu-d-vref} (= In_{Cu-d}/In_{Cu-0.5d-ref}) of the Cu intensity In_{Cu-d} in any depth position from the surface measured by radio frequency glow discharge optical emission spectrometry to the Cu intensity In_{Cu-0.5d-ref} at a depth of 0.5 µm of the standard sample measured by radio frequency glow discharge optical emission spectrometry is preferably within a predetermined range. The IR_{Cu-d-vref} is preferably 2.0 or more and 20 or less in a region where the depth from the surface is from 0.1 µm to 0.5 µm. If an absolute amount of Cu from the vicinity of the outermost surface to the vicinity of the surface layer is too small, the number of crystal grains containing Cu in the Fe-Ni-Cu-Cr layer 3 is decreased or the region in which Cu is present is reduced, which may lead to a possibility that a state of a sufficient mixed potential cannot be formed. If an absolute amount of Cu from the vicinity of the outermost surface to the vicinity of the surface layer is too large, elution of a metal may be increased. To further suppress the elution of a metal during overdischarge, the IR_{Cu-d-vref} is more preferably 2.3 or more and 10 or less, still more preferably 3.0 or more and 10 or less in a region where the depth from the surface is from 0.1 µm to 0.5 µm (in the entire region extending from the surface to a depth from 0.1 µm to 0.5 µm). On the other hand, the IR_{Cu-d-vref} is preferably 2.0 or more and 20 or less, more preferably 2.5 or more and 15 or less, still more preferably 3.0 or more and 15 or less in a region where the depth from the surface is more than 0.5 µm and 0.9 µm or less.

In the Ni-plated surface-treated steel sheet 1, a difference IR_{Cu-MAX}-IR_{Cu-0.1d} between the ratio IR_{Cu-MAX} (= In_{Cu-MAX}/In_{Cu-steel}) and the ratio IR_{Cu-0.1d} (= In_{Cu-0.1d}/In_{Cu-steel}) is preferably 1.0 or less, more preferably 0.6 or less, still more preferably 0.5 or less, particularly preferably 0.3 or less. A smaller value of IR_{Cu-MAX}-IR_{Cu-0.1d} indicates that Cu is diffused closer to the outermost surface inside the Fe-Ni-Cu-Cr layer 3 with a small variation in distribution of the Cu intensity. By controlling IR_{Cu-MAX}-IR_{Cu-0.1d} within these ranges above, particularly, even if the amount of Ni deposited is relatively small, the Ni-plated surface-treated steel sheet 1 can have higher electrolyte solution resistance during overdischarge.

In the Ni-plated surface-treated steel sheet 1, from the viewpoint of suppressing elution of a metal caused by formation of a mixed potential, the ratio IR_{Cr-0.1d} (= In_{Cr-0.1d}/In_{Cr-steel}) of the Cr intensity In_{Cr-0.1d} at a depth of 0.1 µm from the surface to the Cr intensity In_{Cr-steel} in the steel sheet 2 measured by radio frequency glow discharge optical emission spectrometry (GDS) is preferably 0.2 or more and less than 2.0, more preferably 0.2 or more and less than 1.0, still more preferably 0.2 or more and less than 0.95. When the Cr intensity ratio IR_{Cr-0.1d} falls within these ranges above, the Ni-plated surface-treated steel sheet 1 can have higher electrolyte solution resistance during overdischarge.

In the Ni-plated surface-treated steel sheet 1, the ratio IR_{Cr-0.3d} (= In_{Cr-0.3d}/In_{Cr-steel}) of the Cr intensity In_{Cr-0.3d} at a depth of 0.3 µm from the surface to the Cr intensity In_{Cr-steel} in the steel sheet 2 measured by radio frequency glow discharge optical emission spectrometry (GDS) is preferably 0.2 or more and less than 2.0, more preferably 0.2 or more and less than 0.95, still more preferably 0.2 or more and less than 0.7. When the Cr intensity ratio IR_{Cr-0.3d} falls within these ranges above, the Ni-plated surface-treated steel sheet 1 can have higher electrolyte solution resistance during overdischarge.

In the Ni-plated surface-treated steel sheet 1, the ratio IR_{Cr-0.5d} (= In_{Cr-0.5d}/In_{Cr-steel}) of the Cr intensity In_{Cr-0.5d} at a depth of 0.5 µm from the surface to the Cr intensity In_{Cr-steel} in the steel sheet 2 measured by radio frequency glow discharge optical emission spectrometry (GDS) is preferably 0.2 or more and less than 2.0 from the viewpoint of diffusing Cr to the vicinity of the surface layer and stably forming a state of a sufficient mixed potential. If the amount of Cr in the vicinity of the surface layer is too small, the number of crystal grains containing Cr in the surface layer of the Fe-Ni-Cu-Cr layer 3 may be decreased or the region where Cr is present may be reduced. If the amount of Cr in the vicinity of the surface layer is too large, the difference in potential between Cr and Fe may be locally increased. To stably improve the electrolyte solution resistance during overdischarge, the ratio IR_{Cr-0.5d} is more preferably 0.2 or more and less than 0.95, still more preferably 0.2 or more and less than 0.8. When the Cr intensity ratio IR_{Cr-0.5d} falls within these ranges above, the Ni-plated surface-treated steel sheet 1 can have higher electrolyte solution resistance during overdischarge.

In the Ni-plated surface-treated steel sheet 1, the ratio IR_{Cr-0.7d} (= In_{Cr-0.7d}/In_{Cr-steel}) of the Cr intensity In_{Cr-0.7d} at a depth of 0.7 µm from the surface to the Cr intensity In_{Cr-steel} in the steel sheet 2 measured by radio frequency glow discharge optical emission spectrometry (GDS) is preferably 0.2 or more and less than 2.0, more preferably 0.2 or more and less than 0.95, still more preferably 0.2 or more and less than 0.8. When the Cr intensity ratio IR_{Cr-0.7d} falls within these ranges above, the Ni-plated surface-treated steel sheet 1 can have higher electrolyte solution resistance during overdischarge.

In the Ni-plated surface-treated steel sheet 1, the ratio IR_{Cr-0.9d} (= In_{Cr-0.1d}/In_{Cr-steel}) of the Cr intensity In_{Cr-0.9d} at a depth of 0.9 µm from the surface to the Cr intensity In_{Cr-steel} in the steel sheet 2 measured by radio frequency glow discharge optical emission spectrometry (GDS) is preferably 0.2 or more and less than 2.0, more preferably 0.2 or more and less than 1.0, still more preferably 0.2 or more and 0.95 or less. When the Cr intensity ratio IR_{Cr-0.9d} falls within these ranges above, the Ni-plated surface-treated steel sheet 1 can have higher electrolyte solution resistance during overdischarge.

In the Ni-plated surface-treated steel sheet 1, the ratio IR_{Cr-MAX} (= In_{Cr-MAX}/In_{Cr-steel}) of the maximum value of Cr intensity In_{Cr-MAX} in a region from the surface to the boundary between the Fe-Ni-Cu-Cr layer 3 and the steel sheet 2 to the Cr intensity In_{Cr-steel} in the steel sheet 2 measured by the radio frequency glow discharge optical emission spectrometry is preferably 0.3 or more and 2.0 or less, more preferably 0.3 or more and 0.95 or less. When the Cr intensity ratio IR_{Cr-max} falls within these ranges above, the Ni-plated surface-treated steel sheet 1 can have higher electrolyte solution resistance during overdischarge.

In the Ni-plated surface-treated steel sheet 1, the ratio IR_{Cr-0.3d} to _{0.7d} (= In_{Cr-0.3d} to _{0.7d}/In_{Cr-steel}) of the Cr intensity In_{Cu-0.3d} to _{0.7d} in a region at a depth from 0.3 µm to 0.7 µm from the surface (that is, Cr intensity measured in any depth position of the region from the surface to a depth from 0.3 µm to 0.7 µm) to the Cr intensity In_{Cr-steel} in the steel sheet 2 measured by radio frequency glow discharge optical emission spectrometry is preferably 0.2 or more and 2.0 or less, more preferably 0.2 or more and less than 0.95. When the Cr intensity ratio IR_{Cr-0.3d to 0.7d} falls within these ranges above, the Ni-plated surface-treated steel sheet 1 can have higher electrolyte solution resistance during overdischarge.

In the Ni-plated surface-treated steel sheet 1, the ratio IR_{Cr-d-vref} = (In_{Cr-d}/In_{Cr-0.5d-ref}) of the Cr intensity In_{Cr-d} in any depth position from the surface measured by radio frequency glow discharge optical emission spectrometry to the Cr intensity In_{Cr-0.5d-ref} at a depth of 0.5 µm of the standard sample measured by radio frequency glow discharge optical emission spectrometry is preferably within a predetermined range. The IR_{Cr-d-vref} is preferably 2.0 or more and 30 or less in a region where the depth from the surface is in the range of 0.1 µm to 0.5 µm. If the amount of Cr from the vicinity of the outermost surface to the vicinity of the surface layer is too small, the number of crystal grains containing Cr in the outermost surface of the Fe-Ni-Cu-Cr layer 3 is decreased or the region where Cr is present is reduced, which may lead to a possibility that a state of a sufficient mixed potential cannot be formed. If the amount of Cr from the vicinity of the outermost surface to the vicinity of the surface layer is too large, the electric resistance of the surface may extremely increase. The IR_{Cr-d-vref} is more preferably 2.5 or more and 30 or less, still more preferably 5.5 or more and 30 or less, particularly preferably 7.0 or more and 20 or less in a region where the depth from the surface is in the range of 0.1 µm to 0.5 µm. On the other hand, the IR_{Cr-d-vref} is preferably 2.0 or more and 50 or less, more preferably 5.5 or more and 40 or less in a region where the depth from the surface is in the range of more than 0.5 µm and 0.9 µm or less.

In the Ni-plated surface-treated steel sheet 1, preferably, the ratio IR_{Cu-0.5d} (= In_{Cu-0.5d}/In_{Cu-Steel}) of the Cu intensity In_{Cu-0.5d} at a depth of 0.5 µm from the surface of the Fe-Ni-Cu-Cr layer 3 to the Cu intensity In_{Cu-steel} in the steel sheet 2 is 0.50 or more and less than 3.0, and the ratio IR_{Cr-0.5d} (= In_{Cr-0.5d}/In_{Cr-steel}) of the Cr intensity In_{Cr-0.5d} to the Cr intensity In_{Cr-steel} in the steel sheet 2 is 0.2 or more and less than 2.0, because higher electrolyte solution resistance during overdischarge and favorable battery characteristics can be provided. By controlling both of the Cu intensity ratio and the Cr intensity ratio within these ranges above, it is considered that the mixed potential can have a stable state because Cu and Cr are contained in the vicinity of the surface layer of the Fe-Ni-Cu-Cr layer 3. In particular, even if Cr is present in the vicinity of the outermost surface or near the surface layer, Cu contained in the Fe-Ni-Cu-Cr layer 3 can suppress an increase in contact resistance. Thus, elution of a metal can be suppressed, and better battery characteristics are obtained.

In the Ni-plated surface-treated steel sheet 1, the ratio IR_{Fe-0.1d} (= In_{Fe-0.1d}/(0.1 × In_{Fe-MAX-ref})) of the Fe intensity In_{Fe-0.1d} at a depth of 0.1 µm from the surface to 10% of the maximum value of Fe intensity In_{Fe-MAX-ref} when the standard sample (Ni-plated steel sheet) is measured from the surface toward the steel sheet by radio frequency glow discharge optical emission spectrometry is 1.0 or more, preferably 2.0 or more and less than 7.0. By controlling the IR_{Fe-0.1d} within these ranges above, the Fe-Ni-Cu-Cr layer can be formed across the surface-treated steel sheet 1 even in the surface-treated steel sheet 1 having a large width or a large area, and the electrolyte solution resistance can be stably enhanced.

In the Ni-plated surface-treated steel sheet 1, the lower limit of the amount of Ni deposited on the surface on which the Fe-Ni-Cu-Cr layer 3 is formed as the outermost layer is preferably 0.45 g/m² or more, more preferably 0.8 g/m² or more, still more preferably 2.5 g/m² or more, particularly preferably 3.0 g/m² or more from the viewpoint of appropriately forming the Fe-Ni-Cu-Cr layer 3 and controlling the Cu intensity ratios and Cr intensity ratios in the steel sheet 2 and the Fe-Ni-Cu-Cr layer 3 within appropriate ranges. In the Ni-plated surface-treated steel sheet 1, the upper limit of the amount of Ni deposited on the surface on which the Fe-Ni-Cu-Cr layer 3 is formed as the outermost layer is preferably 10.7 g/m² or less, more preferably less than 8.9 g/m², still more preferably 8.0 g/m² or less, particularly preferably 7.2 g/m² or less because, unless otherwise, Fe is difficult to diffuse up to the outermost surface, and a higher heat treatment temperature or a longer heat treatment time is required to sufficiently diffuse Fe. The amount of Ni deposited can be determined by X-ray fluorescence analysis. In X-ray fluorescence analysis, quantitation can be performed by a calibration curve method. X-ray fluorescence analysis may be performed on the Ni-plated surface-treated steel sheet 1 including the Fe-Ni-Cu-Cr layer 3 formed by a thermal diffusion treatment, or may be performed on the steel sheet 2 including the Ni-plating layer before a thermal diffusion treatment.

As shown in Fig. 1, in the present embodiment, the Fe-Ni-Cu-Cr layer 3 is formed on only one surface of the steel sheet 2, but the Ni-plated surface-treated steel sheet 1 can have any other configuration without limitation. It is sufficient that the Fe-Ni-Cu-Cr layer 3 is formed on at least one of the outermost surfaces of the steel sheet 2, and the Fe-Ni-Cu-Cr layer 3 may be formed on both of the outermost surfaces of the steel sheet 2.

The Ni-plated surface-treated steel sheet 1 according to the present embodiment can be produced as follows.

Initially, a Ni-plating layer is formed on an original plate for the steel sheet 2. As described above, a carbon steel containing Cu and Cr in the predetermined proportions can be suitably used as the original plate for the steel sheet 2. The Cu content in the carbon steel used here is more preferably 0.05 to 1.0% by weight, still more preferably 0.05 to 0.5% by weight. The Cr content in the carbon steel is more preferably 0.03 to 1.0% by weight, still more preferably 0.03 to 0.5% by weight, particularly preferably 0.03 to 0.4% by weight. Examples of the Ni-plating bath used in formation of the Ni-plating layer include plating baths usually used, that is, a Watts bath, a sulfamic acid bath, a fluoroborate bath, a chloride bath, and the like. For example, using a Watts bath having a bath composition containing 200 g/L to 350 g/L of nickel sulfate hexahydrate, 20 g/L to 60 g/L of nickel chloride hexahydrate, and 10 g/L to 50 g/L of boric acid, the Ni-plating layer can be formed at a pH of 3.0 to 5.0, a bath temperature of 40°C to 70°C, and a current density of 5 A/dm² to 40 A/dm². Although it is sufficient that the Ni-plating layer is formed on at least one surface of the original plate as the steel sheet 2, preferably, the Ni-plating layer is formed on both surfaces thereof.

In the present embodiment, preferably, a trace of a semi-brightener comprising a compound without sulfur, such as an aliphatic unsaturated alcohol (such as a polyoxyethylene adduct of an unsaturated alcohol), an unsaturated carboxylic acid, formaldehyde, or coumarin is added to the Ni-plating bath to form the Fe-Ni-Cu-Cr layer 3 by facilitating diffusion of Cu and Cr contained in the original plate for the steel sheet 2 in a thermal diffusion treatment step described later. Specifically, the semi-brightener is added in an amount such that the total amount of the semi-brightener in the plating bath is preferably 0.6 mL/L to 6.0 mL/L, more preferably 0.8 mL/L to 5.0 mL/L, still more preferably 1.2 mL/L to 5.5 mL/L. These semi-brighteners may be used alone or in combination. When these semi-brighteners are used in combination, the total amount of these semi-brighteners preferably falls within these ranges above.

The amount W of Ni deposited on the original plate for the steel sheet 2 as a result of formation of the Ni-plating layer is not particularly limited as long as the Fe-Ni-Cu-Cr layer 3 as the outermost surface of the Ni-plated surface-treated steel sheet 1 can be formed and the configuration can be controlled. If the amount deposited is too large, Fe, Cu, and Cr are difficult to diffuse up to the outermost surface, and a higher heat treatment temperature or a longer heat treatment time is required to sufficiently diffuse Fe, Cu, and Cr, which may lead to difficulties in appropriately forming the Fe-Ni-Cu-Cr layer 3. Thus, the amount deposited is preferably 10.7 g/m² or less, more preferably 8.9 g/m² or less, still more preferably 8.0 g/m² or less, particularly preferably 7.2 g/m² or less. On the other hand, if the amount W of Ni deposited is too small, it is difficult to appropriately form the Fe-Ni-Cu-Cr layer 3, and the electrolyte solution resistance during overdischarge may be reduced. Thus, the amount W of Ni deposited is preferably 0.45 g/m² or more, more preferably 0.8 g/m² or more, still more preferably 2.5 g/m² or more, particularly preferably 3.0 g/m² or more. When the Fe-Ni-Cu-Cr layer 3 is formed on both of the outermost surfaces of the steel sheet 2, the amount W of Ni deposited on each surface falls within these ranges above. When the Ni-plated surface-treated steel sheet 1 according to the present embodiment is used in a battery container in the form of a can, preferably, the Fe-Ni-Cu-Cr layer 3 is formed on the outermost surface which will form the inner surface of the battery container, an Fe-Ni diffusion layer is formed on the surface which will form the outer surface of the battery container, and a Ni layer is formed on the Fe-Ni diffusion layer. To make the outer surface of the battery container have such a configuration, the amount of Ni deposited on the surface which will form the outer surface of the battery container is preferably 9.0 g/m² to 90 g/m².

Next, the steel sheet on which the Ni-plating layer is formed on the surface of the original plate for the steel sheet 2 (hereinafter, referred to as plated steel sheet) is subjected to a thermal diffusion treatment to form the Fe-Ni-Cu-Cr layer 3. By appropriately controlling the conditions for the thermal diffusion treatment, the Fe-Ni-Cu-Cr layer 3 can be formed on the steel sheet.

The thermal diffusion treatment can be performed by any one of continuous annealing and batch annealing, and is not particularly limited. Preferably, the heat treatment atmosphere is a non-oxidizing atmosphere or a reducing protective gas atmosphere. When a reducing protective gas atmosphere is used, preferably, a mixed gas of H₂ and N₂ called HNX gas is used, for example. In the present embodiment, the thermal diffusion treatment comprises an initial heating step, a final heating step, and a cooling step.

The initial heating step is a step of heating the plated steel sheet from ambient temperature to the start temperature in the final heating step described later (final heating start temperature). The heating rate in the initial heating step (hereinafter, also referred to as initial heating rate) is a rate determined by calculating the slope in the temperature profile of the initial heating step for the plated steel sheet. In other words, the initial heating rate can be calculated by dividing the difference in temperature between the start temperature of the initial heating step and the start temperature of the final heating step by the time taken. The initial heating rate is preferably higher than the heating rate in the final heating step described later. Specifically, the initial heating rate is preferably more than 4°C/sec and 14°C/sec or less.

The maximum heating rate in the initial heating step (hereinafter, also referred to as maximum heating rate) is a rate determined by calculating the maximum slope of the temperature profile of the initial heating step for the plated steel sheet, i.e., that of the temperature profile from ambient temperature to the start temperature in the final heating step, and is preferably 4°C/sec or higher. To appropriately forming the Fe-Ni-Cu-Cr layer 3 and control the Cu intensity ratios and Cr intensity ratios in the steel sheet 2 and the Fe-Ni-Cu-Cr layer 3 in appropriate ranges, the maximum heating rate in the initial heating step is preferably 14°C/sec or lower, more preferably 12°C/sec or lower, still more preferably 10°C/sec or lower. In particular, to suppress diffusion of Fe to the outermost surface, the maximum heating rate in the temperature profile of the initial heating step at 450°C or higher is preferably 14°C/sec or lower, more preferably 12°C/sec or lower, still more preferably 10°C/sec or lower.

The final heating step is a step of heating the plated steel sheet from the final heating start temperature to the highest temperature in the thermal diffusion treatment (hereinafter, referred to as goal temperature). The final heating start temperature is preferably 600°C or higher at which Ni in Ni-plating layer and Fe in the steel sheet 2 start mutually diffusing more actively. From the viewpoint of facilitating active diffusion of Cu and Cr in the final heating step, the final heating start temperature is preferably 650°C or higher, still more preferably 680°C or higher, particularly preferably 710°C or higher. The final heating start temperature is preferably less than 900°C, more preferably less than 850°C. To appropriately form the Fe-Ni-Cu-Cr layer 3, the goal temperature is preferably less than 930°C, more preferably less than 900°C, still more preferably less than 870°C. As described later, the goal temperature can be set based on the final heating start temperature such that the difference in temperature from the final heating start temperature is a predetermined difference in temperature.

In the present embodiment, to improve the electrolyte solution resistance during overdischarge of the Ni-plated surface-treated steel sheet 1 described later, the heating rate in the final heating step (hereinafter, also referred to as final heating rate) is preferably 4°C/sec or lower, more preferably 3°C/sec or lower, still more preferably 1°C/sec or lower. The heating rate in the final heating step is preferably 0.1°C/sec or higher, more preferably 0.2°C/sec or higher.

The difference in temperature between the goal temperature and the final heating start temperature can be 10°C or higher, and is preferably 30°C or higher, more preferably 40°C or higher. If the difference in temperature is too small, the heating time in the final heating step (final heating time) is insufficient, and the target alloy state of the Fe-Ni-Cu-Cr layer 3 may not be obtained. In particular, when the amount of Ni deposited is 2.5 g/m² or more, the difference in temperature is preferably 30°C or higher, more preferably 40°C or higher, still more preferably 60°C or higher. By controlling the difference in temperature to 60°C or higher, the target alloy state of the surface can be obtained, and a Ni-plated surface-treated steel sheet 1 having higher electrolyte solution resistance during overdischarge can be stably obtained. The upper limit of the difference in temperature is preferably 150°C or lower, more preferably 120°C or lower, still more preferably 100°C or lower. In the present embodiment, the final heating rate is preferably 4°C/sec or lower. Thus, if the difference in temperature is too large, the time in the high temperature range is too long, and the target alloy state of the surface may not be obtained.

In the cooling step, the plated steel sheet heated to the goal temperature is cooled to 120°C or lower. The cooling rate is not particularly limited. From the viewpoint of suppressing generation of poor shapes or wrinkles, the cooling rate is preferably 1°C/sec to 20°C/sec, more preferably 1°C/sec to 10°C/sec.

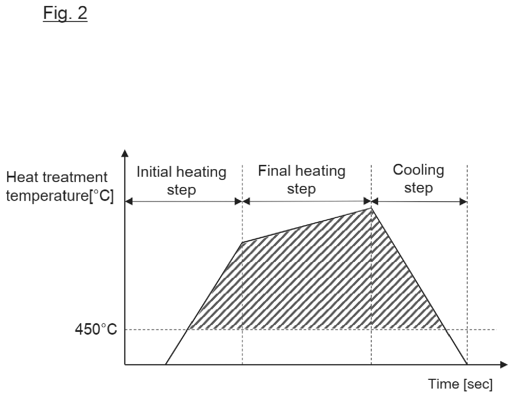

Fig. 2 is an example of a temperature profile of a thermal diffusion treatment on the plated steel sheet for illustrating the method of calculating the thermal history Y in the thermal diffusion treatment.

To improve the electrolyte solution resistance during overdischarge of the Ni-plated surface-treated steel sheet 1, in the thermal diffusion treatment, the thermal history Y applied to the plated steel sheet through the initial heating step, the final heating step, and the cooling step is preferably 150,000°C·sec or less, more preferably 120,000°C·sec or less, still more preferably 100,000°C·sec or less. To sufficiently thermally diffuse Fe and Ni to obtain the target alloy state, the thermal history Y is preferably 15,000°C·sec or more, more preferably 35,000°C·sec or more, still more preferably 45,000°C·sec or more. The thermal history Y can be determined by integrating the amount of change in heating temperature and cooling temperature with respect to the time in a region of 450°C or higher. In other words, the hatched area in Fig. 2 corresponds to the thermal history Y in the thermal diffusion treatment. To control the thermal history Y of the plated steel sheet to these ranges above, the heating rates (also including the maximum heating rate) in the initial heating step and the final heating step in a region of 450°C or higher, the heating start temperature, the goal temperature, and the cooling rate in the cooling step can be appropriately controlled.

If the thermal history Y in the thermal diffusion treatment is too large or too small, the target alloy state is not obtained, and the electrolyte solution resistance during overdischarge tends to reduce.

The ratio W/Y × 10⁵ of the amount W of Ni deposited (g/m²) to the thermal history Y is preferably 1.0 or more. If W/Y × 10⁵ is less than 1.0, the target alloy state is not obtained, and the electrolyte solution resistance during overdischarge may be reduced. The ratio W/Y × 10⁵ of the amount W of Ni deposited (g/m²) to the thermal history Y is preferably 20.0 or less, more preferably 10.0 or less, still more preferably 7.0 or less. If W/Y × 10⁵ is more than 20.0, metals insufficiently diffuse, and the target alloy state may not be obtained.

As described above, the present inventors have found that by controlling the amount W of Ni deposited on the steel sheet to the ranges above and performing the thermal diffusion treatment on the Ni-plated steel sheet under the above-mentioned conditions, Ni in the Ni-plating layer and Fe, Cu, and Cr in the steel sheet 2 can mutually diffuse to form the Fe-Ni-Cu-Cr layer 3 on the steel sheet 2. The Ni-plated surface-treated steel sheet 1 produced by the above-mentioned method includes the Fe-Ni-Cu-Cr layer 3, and thus has high electrolyte solution resistance during overdischarge.

Traditionally, known methods for improving the electrolyte solution resistance of the Ni-plated steel sheet involve forming an Fe-Ni diffusion layer by performing a thermal diffusion treatment on the steel sheet including the Ni-plating layer formed thereon. In contrast, the present inventors have found that by diffusing not only Fe but also Cu and Cr contained in the steel sheet 2 to form the Fe-Ni-Cu-Cr layer 3 on the steel sheet 2, a Ni-plated surface-treated steel sheet 1 having higher electrolyte solution resistance can be obtained.

Although the reason why the Fe-Ni-Cu-Cr layer 3 can be formed by the above-mentioned thermal diffusion treatment method is not clarified, the followings are considered. First, nickel and chromium in iron have about the same coefficient of diffusion, and copper has a coefficient of diffusion which is about the same as but slightly higher than those of nickel and chromium. Chromium actively diffuses beyond 700°C, and the diffusion rate thereof remarkably drops at 700°C or lower. Copper also starts actively diffusing beyond 700°C. Thus, in the above-mentioned thermal diffusion treatment method, by gradually raising the temperature in the initial heating, diffusion of copper and chromium can be suppressed to prevent copper and chromium from being deficient near the interface. Moreover, in the above-mentioned thermal diffusion treatment method, by heating to 700°C or higher in the final heating step, migration of copper and chromium from the interface to the surface side can be promoted. It is considered that due to such a copper and chromium diffusion mechanism, the Fe-Ni-Cu-Cr layer 3 containing not only iron but also copper and chromium can be formed. Further, it is considered that by continuing raising the temperature in the final heating step, a rapid change from a nickel crystal structure to an iron nickel alloy crystal structure can be suppressed; and thereby, obstruction of the copper and chromium diffusion route can be prevented, and the Fe-Ni-Cu-Cr layer 3 having a surface containing copper and chromium in sufficient and trace amounts can be obtained.

A more preferred Fe-Ni-Cu-Cr layer 3 can be obtained by forming the Ni-plating layer before thermal diffusion using a Ni-plating bath containing a trace amount of the semi-brightener. The Ni-plating layer formed using a nickel plating bath containing a trace amount of the semi-brightener has more plating strain than the Ni-plating layer formed using a non-glossy Ni-plating bath. For this reason, when the plating strain is released during the thermal diffusion treatment, the driving force of atoms accompanied by a change in crystal structure can be increased. As a result, it is considered that in diffusion from the steel sheet to the Ni-plating layer, particularly in diffusion in the final heating step, not only iron but also copper and chromium are easy to diffuse, and a more preferred Fe-Ni-Cu-Cr layer 3 can be obtained. If the semi-brightener is excessively added to the Ni-plating bath, the size of crystal grains in the Ni-plating layer is reduced, and the Fe-Ni-Cu-Cr layer 3 may be too hard after copper and chromium migrate. For this reason, the amount of the semi-brightener to be added is preferably 6.0 mL/L or less.

As above, the Ni-plated surface-treated steel sheet 1 according to the present embodiment is produced.

After the thermal diffusion treatment is performed, the Ni-plated surface-treated steel sheet may be subjected to temper rolling as needed. By performing temper rolling, the mechanical properties can be controlled, the shape can be corrected, and surface roughness can be given.

### <Battery container>

The battery container according to the present embodiment is obtained by forming and processing the Ni-plated surface-treated steel sheet 1 such that the surface of the Ni-plated surface-treated steel sheet 1 on which the Fe-Ni-Cu-Cr layer 3 is formed faces the inside of the battery container. Specifically, the battery container according to the present embodiment can be obtained by forming the Ni-plated surface-treated steel sheet 1 into a shape of a battery container by press forming such as drawing, ironing, drawing and ironing (DI), or draw and thin redraw (DTR). Examples of the shape of the battery container include cylindrical shapes, rectangular shapes, pouch shapes, cup shapes, and plate shapes partially having depressions and projections or holes, such as those of covers, collector plates, and terminals.

The battery container obtained by forming the Ni-plated surface-treated steel sheet 1 according to the present embodiment includes the Fe-Ni-Cu-Cr layer 3 formed on the inner surface thereof, and thus can have high electrolyte solution resistance during overdischarge, and suppress corrosion caused by elution of Fe.

### EXAMPLES

Hereinafter, the present invention will be more specifically described by way of Examples, but the present invention will not be limited to these Examples.

The methods of evaluating properties are shown below.

### <Thickness of Ni-plating layer>

In Examples and Comparative Examples, a plated steel sheet including a Ni-plating layer formed thereon was measured by an X-ray fluorescence analyzer to determine the amount of Ni deposited per one surface of the Ni-plated steel sheet. The X-ray fluorescence analyzer used was ZSX100e (available from Rigaku Corporation), and the measurement was performed by a calibration curve method. The thickness of the Ni-plating layer was determined by calculating the thickness from the amount of Ni deposited using the density of Ni (8.9 g/cm³).

### <Intensities of metals by GDS, intensity ratios, and thickness of Fe-Ni-Cu-Cr layer>

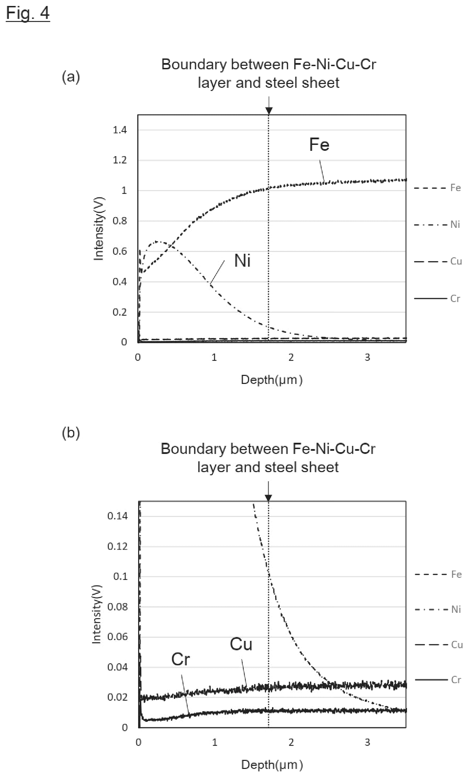

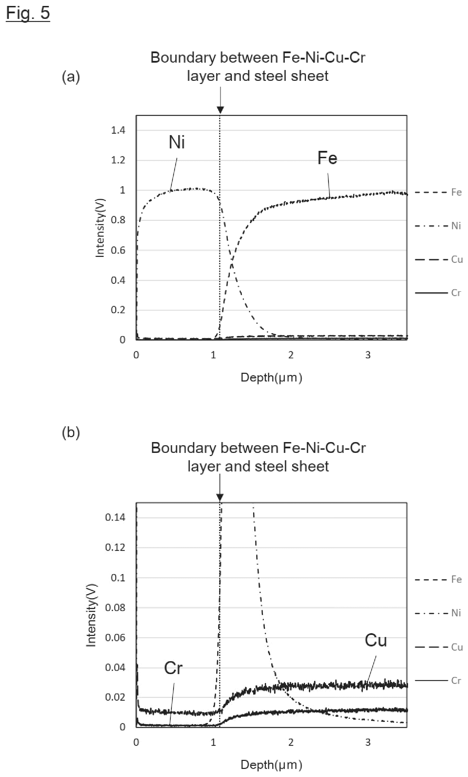

Initially, by the above-mentioned method, a Ni etching rate of 0.035 µm/sec was determined with a radio frequency glow discharge optical emission spectrometer (HORIBA, Ltd., Model No. GD-PROFILER 2) using a standard Ni-plated steel sheet (standard sample) including a low-carbon steel sheet having a thickness of 0.3 mm on which a non-glossy Ni-plated having a thickness of 1.1 µm was formed. In addition, with respect to the standard Ni-plated steel sheet, the maximum value of the Ni intensity, the Cu intensities and Cr intensities at depth positions of 0.1 µm, 0.3 µm, 0.5 µm, 0.7 µm, and 0.9 µm were verified. Next, the Ni-plated surface-treated steel sheet 1 was measured to measure changes in Fe intensity, Ni intensity, Cu intensity, and Cr intensity with respect to the measurement time (etching time), and the measurement time (etching time) of the Ni-plated surface-treated steel sheet 1 by radio frequency glow discharge optical emission spectrometry was converted to the depth based on the Ni etching rate. The obtained charts are shown in Fig. 3(a) to Fig. 5(b). Fig. 3(a) is a chart obtained by radio frequency glow discharge optical emission spectrometry in Example 1, and Fig. 3(b) is an enlarged view of the chart in Fig. 3(a). Fig. 4(a) is a chart obtained by radio frequency glow discharge optical emission spectrometry in Example 2, and Fig. 4(b) is an enlarged view of the charge in Fig. 4(a). Fig. 5(a) is a chart obtained by radio frequency glow discharge optical emission spectrometry in Comparative Example 1, and Fig. 5(b) is an enlarged view of the chart in Fig. 5(a).

In each of the obtained charts, formation of the Fe-Ni-Cu-Cr layer 3 was verified by comparison to the standard Ni-plated steel sheet by the above-mentioned method. The Cu intensities and Cr intensities at depths of 0.1 µm, 0.3 µm, 0.5 µm, 0.7 µm, and 0.9 µm were determined. The Cu intensity and Cr intensity at a depth D_{Ni2%} at which the Ni intensity was 2% of the maximum value of the Ni intensity of the standard sample were determined as the Cu intensity In_{Cu-steel} and the Cr intensity In_{Cr-steel} in the steel sheet 2, respectively. In each of the Ni-plated surface-treated steel sheets 1, the maximum value of Cu intensity In_{Cu-MAX}, the maximum value of Cr intensity In_{Cr-MAX}, and the depths at these maximum values were also determined. The Cu intensity at a depth at which the Ni intensity was 10%, which indicated the boundary between the Fe-Ni-Cu-Cr layer 3 and the steel sheet 2, was measured, and the thickness of the Fe-Ni-Cu-Cr layer 3 was determined from the depth. Furthermore, the ratio IR_{Fe-0.1d} of the Fe intensity In_{Fe-0.1d} at a depth of 0.1 µm from the surface to 10% of the maximum value of Fe intensity In_{Fe-MAX-ref} in the standard sample was determined.

The ratio IR_{Cu-0.1d} of the Cu intensity In_{Cu-0.1d} at a depth of 0.1 µm from the surface and the Cu intensity In_{Cu-steel} in the steel sheet 2 was determined. Likewise, the Cu intensity ratio IR_{Cu-0.3d} at a depth of 0.3 µm, the Cu intensity ratio IR_{Cu-0.5d} at a depth of 0.5 µm, the Cu intensity ratio IR_{Cu-0.7d} at a depth of 0.7 µm, and the Cu intensity ratio IR_{Cu-0.9d} at a depth of 0.9 µm were determined. Likewise, the Cr intensity ratio at a depth of 0.1 µm, the Cr intensity ratio IR_{Cr-0.3d} at a depth of 0.3 µm, the Cr intensity ratio IR_{Cr-0.5d} at a depth of 0.5 µm, the Cr intensity ratio IR_{Cr-0.7d} at a depth of 0.7 µm, and the Cr intensity ratio IR_{Cr-0.9d} at a depth of 0.9 µm were determined. The maximum value of Cu intensity In_{Cu-MAX}, the maximum value of Cr intensity In_{Cr-MAX}, the ratio IR_{Cu-MAX} of In_{Cu-MAX} to the Cu intensity In_{Cu-steel} in the steel sheet 2, and the ratio IR_{Cu-MAX} of In_{Cr-MAX} to the Cu intensity In_{Cu-steel} in the steel sheet 2 were determined. Furthermore, the ratios IR_{Cu-d-vref} of the Cu intensities at the respective depths to the Cu intensity In_{Cu-0.5d-ref} at a depth of 0.5 µm of the standard sample and the ratios IR_{Cr-d-vref} of the Cr intensities at the respective depths to the Cr intensity In_{Cr-0.5d-ref} at a depth of 0.5 µm of the standard sample were determined.

The specific measurement conditions for the radio frequency glow discharge optical emission spectrometer are shown below.
· measurement mode: HDD mode
· excitation mode: RF (normal)
· output: 35 W
· pressure: 600 Pa
· module: 7 V
· phase: 5 V
· anode diameter: 4 mm
· gas purging time: 30 seconds
· preparative sputtering time: 30 seconds
· background measurement time: 5 seconds
· measurement time: 100 seconds
· acquisition interval: 0.1 seconds

### <Evaluation of electrolyte solution resistance during overdischarge>

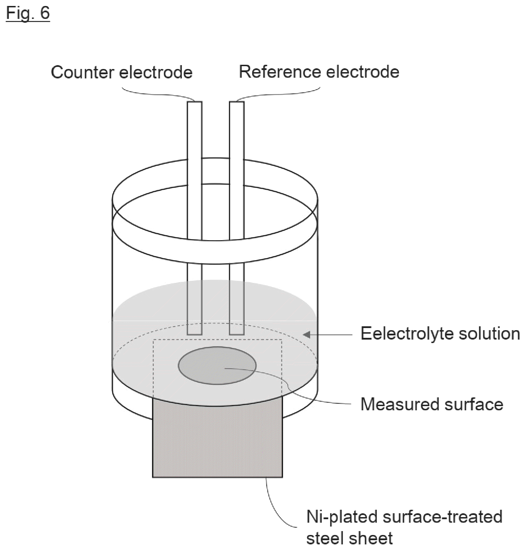

Ni-plated surface-treated steel sheets 1 were evaluated for electrolyte solution resistance during overdischarge by a Linear Sweep Voltammetry (LSV) using a multi electrochemical measurement system HZ-Pro (Model No. HAG-PROM12, available from Hokuto Denko Corp.). The measurement was performed using the measurement jig shown in Fig. 6. Fig. 6 is a schematic view of a measurement jig used in evaluation of the electrolyte solution resistance of the Ni-plated surface-treated steel sheet 1 by the LSV method. As shown in Fig. 6, a Ni-plated surface-treated steel sheet 1 was attached to the bottom of the measurement jig, an electrolyte solution (1 mol/L LiPF₆, EC:DEC (1:1 v/v%), available from KISHIDA CHEMICAL Co., Ltd.) was added to the jig, and metal lithium (available from Honjo Metal Co., Ltd.) as a counter electrode and a reference electrode was attached to jig upper portion electrodes. The surface area of the measured surface was 1.04 cm², and the surface area of the counter electrode and that of the reference electrode were each 1.2 cm². The distance between the reference electrode and the working electrode was 2 mm, the distance between the counter electrode and the working electrode was 2 mm, and the distance between the counter electrode and the reference electrode was 12 mm. The measurement was performed in a dry room at a dew point of -40°C or lower and room temperature of 23°C. Polarization was caused from the natural potential to +4.1 V (vsLi/Li⁺) corresponding to overdischarge at a scanning rate 2 mV/sec, the current (µA/cm²) at 4.1 V was measured, and the electrolyte solution resistance during overdischarge of the Ni-plated surface-treated steel sheet 1 was evaluated. A smaller current indicates less elution of a metal such as Fe and higher electrolyte solution resistance during overdischarge.

### <Contact resistance>

A Ni-plated surface-treated steel sheet 1 was cut to prepare test pieces of a 25-mm square. In the next step, one of the prepared test pieces was measured for contact resistance [mΩ] using an electric contact simulator (available from Yamazaki Seimitsu Kenkyuusho, Corp., Model No. CRS-1) under a contact load of 150 gf. A smaller contact resistance indicates higher battery characteristics when the Ni-plated surface-treated steel sheet 1 is used as a battery container.

### <<Example 1>>

An original plate for the steel sheet 2 prepared was a cold-rolled steel sheet of a low carbon aluminum-killed steel containing 0.2% by weight or more and 0.4% by weight or less of Cu and 0.1% by weight or more and less than 0.3% by weight of Cr (low-carbon steel A) and having a thickness of 0.5 mm.

Then, the prepared cold-rolled steel sheet was subjected to alkaline electrolytic degreasing and pickling by immersion in sulfuric acid, and then, subjected to electroplating (Ni-plating) in a Ni-plating bath having the following bath composition under the conditions shown below to form a Ni-plating layer on the surface of the cold-rolled steel sheet, the Ni-plating layer having an amount W of Ni deposited of 4.45 g/m². Thus, a plated steel sheet was obtained.

### <Conditions for Ni-plating>

Bath composition: 250 g/L of nickel sulfate hexahydrate, 45 g/L of nickel chloride hexahydrate, 30 g/L of boric acid, 3.0 mL/L of semi-brightener (unsaturated alcohol polyoxyethylene adduct, unsaturated carboxylic acid, formaldehyde)
pH: 4.0 to 5.0
Bath temperature: 60°C
Current density: 10 A/dm²

Next, the steel sheet on which the Ni-plating layer was formed (plated steel sheet) was subjected to a thermal diffusion treatment by continuous annealing under a reducing protective gas atmosphere to form an Fe-Ni-Cu-Cr layer 3, and further subjected to temper rolling at a draft of 3% or less after the thermal diffusion treatment to give a Ni-plated surface-treated steel sheet 1 comprising a steel sheet 2 and an Fe-Ni-Cu-Cr layer 3 formed on one surface of the steel sheet 2. In the continuous annealing, in the initial heating step, the plated steel sheet was heated from ambient temperature to the final heating start temperature. The final heating start temperature was selected within a temperature range of 660 to 694°C. The maximum heating rate in the initial heating step (maximum heating rate) was 4.96°C/sec. Subsequently, in the final heating step, the goal temperature was selected within a temperature range of 695 to 729°C such that the difference between the final heating start temperature and the final heating goal temperature (the difference in temperature in the final heating step) was 40°C, and the plated steel sheet was heated at a heating rate of 0.37°C/sec. Then, in the cooling step, the plated steel sheet was cooled to 120°C or lower by blowing a cool gas such as HNX gas. The thermal history Y of the Ni-plated steel sheet from the initial heating step through the final heating step to the cooling step was 57,920°C·sec.

The resulting Ni-plated surface-treated steel sheet 1 was evaluated for various properties according to the above-mentioned methods. The results are shown in Table 1. In Table 1, the Cu intensity and Cr intensity at each depth are collectively expressed as In_{Cu-d} and In_{Cr-d}, respectively. The ratios of the Cu intensities at the respective depths to the Cu intensity in the steel sheet 2 are collectively expressed as IR_{Cu-d}, and the ratios of the Cr intensities at the respective depths to the Cr intensity in the steel sheet 2 are collectively expressed as IR_{Cr-d}.

### <<Example 2>>

A Ni-plated surface-treated steel sheet 1 was obtained in the same manner as in Example 1 except that the original plate for the steel sheet 2 was changed to a cold-rolled steel sheet of a low carbon aluminum-killed steel containing 0.01% by weight or more and less than 0.05% by weight of Cu and 0.01% by weight or more and less than 0.05% by weight of Cr (low-carbon steel B) and having a thickness of 0.5 mm, and was evaluated likewise. The results are shown in Table 1.

### <<Example 3>>

A Ni-plated surface-treated steel sheet 1 was obtained in the same manner as in Example 1 except that the original plate for the steel sheet 2 was changed to a cold-rolled steel sheet of a low carbon aluminum-killed steel containing 0.1% by weight or more and less than 0.2% by weight of Cu and 0.03% by weight or more and less than 0.05% by weight of Cr (low-carbon steel C) and having a thickness of 0.5 mm, and the thermal diffusion treatment was performed on the conditions shown in Table 5. The Ni-plated surface-treated steel sheet 1 was evaluated likewise.

### <<Examples 4, 5>>

Ni-plated surface-treated steel sheets 1 were obtained in the same manner as in Example 3 except that the thermal diffusion treatment was performed on the conditions shown in Table 5, and were evaluated likewise.

### <<Example 6>>

A Ni-plated surface-treated steel sheet 1 was obtained in the same manner as in Example 3 except that the amount of Ni deposited by Ni-plating was changed to 0.89 g/m², and the thermal diffusion treatment was performed on the conditions shown in Table 5, and was evaluated likewise.

### <<Examples 7, 8>>

Ni-plated surface-treated steel sheets 1 were obtained in the same manner as in Example 3 except that the amount of Ni deposited by Ni-plating was changed to 2.67 g/m², and the thermal diffusion treatment was performed on the conditions shown in Table 5, and were evaluated likewise.

### <<Example 9>>

A Ni-plated surface-treated steel sheet 1 was obtained in the same manner as in Example 1 except that the original plate for the steel sheet 2 was changed to a cold-rolled steel sheet of a low carbon aluminum-killed steel containing 0.05% by weight or more and less than 0.1% by weight of Cu and 0.03% by weight or more and less than 0.05% by weight of Cr (low-carbon steel D) and having a thickness of 0.5 mm, and the thermal diffusion treatment was performed on the conditions shown in Table 5. The Ni-plated surface-treated steel sheet 1 was evaluated likewise.

### <<Example 10>>

A Ni-plated surface-treated steel sheet 1 was obtained in the same manner as in Example 3 except that the amount of Ni deposited by Ni-plating was changed to 6.68 g/m², and the thermal diffusion treatment was performed on the conditions shown in Table 5, and was evaluated likewise.

### <<Example 11>>

A Ni-plated surface-treated steel sheet 1 was obtained in the same manner as in Example 10 except that the original plate for the steel sheet 2 was changed to low-carbon steel D, and was evaluated likewise.

### <<Example 12>>

A Ni-plated surface-treated steel sheet 1 was obtained in the same manner as in Example 11 except that the original plate for the steel sheet 2 was changed to the low-carbon steel B, and was evaluated likewise.

### <<Comparative Example 1>>

A Ni-plated steel sheet was obtained in the same manner as in Example 2 except that the amount of Ni deposited was changed to 8.9 g/m², and the thermal diffusion treatment was not performed, and was evaluated likewise. The results are shown in Table 1. In Comparative Example 1, the intensities of the elements measured by radio frequency glow discharge optical emission spectrometry were about the same as those in the standard Ni-plated steel sheet. Thus, it was determined that the Fe-Ni-Cu-Cr layer 3 was not formed. It was also verified in Comparative Example 1 that the ratio of Cu intensity at each depth in the Ni-plating layer to that in the steel sheet 2 and the ratio of Cr intensity at each depth in the Ni-plating layer to that in the steel sheet 2 were less than 0.5 and less than 0.2, respectively.

### <<Comparative Example 2>>

A Ni-plated steel sheet was obtained in the same manner as in Example 10 except that the thermal diffusion treatment was performed on the conditions shown in Table 5, and was evaluated likewise.

### <<Comparative Example 3>>

A Ni-plated steel sheet was obtained in the same manner as in Example 10 except that the amount of Ni deposited by Ni-plating was changed to 8.9 g/m², and was evaluated likewise.

[Table 1]

**Table 1**

| | | | | | Ex. 1 | | Ex. 2 | | Ex. 3 | | Ex. 4 | | Ex. 5 | |
|---|---|---|---|---|---|---|---|---|---|---|---|---|---|---|
| | Type of substrate | | | | Low-carbon steel A | | Low-carbon steel B | | Low-carbon steel C | | Low-carbon steel C | | Low-carbon steel C | |
| | Cu content in substrate | | | [mass%] | 0.2 or more and 0.4 or less | | 0.01 or more and less than 0.05 | | 0.1 or more and less than 0.2 | | 0.1 or more and less than 0.2 | | 0.1 or more and less than 0.2 | |
| | Cr content in substrate | | | [mass%] | 0.1 or more and less than 0.3 | | 0.01 or more and less than 0.03 | | 0.03 or more and less than 0.05 | | 0.03 or more and less than 0.05 | | 0.03 or more and less than 0.05 | |
| | Thickness of Ni-plating layer | | | [µm] | 0.5 | | 0.5 | | 0.5 | | 0.5 | | 0.5 | |
| GDS | | | | | Cu | Cr | Cu | Cr | Cu | Cr | Cu | Cr | Cu | Cr |
| | Cu intensity In_{Cu-steel}, Cr intensity In_{Cr-steel} in steel sheet | | | [V] | 0.0567 | 0.0299 | 0.0297 | 0.0110 | 0.0345 | 0.0074 | 0.0374 | 0.0073 | 0.0390 | 0.0074 |
| | Cu intensity In_{Cu-d}, Cr intensity In_{Cr-d} in outermost layer | | | | | | | | | | | | | |
| | | Depth d from surface | 0.1µm | [V] | 0.0486 | 0.0091 | 0.0202 | 0.0056 | 0.0311 | 0.0045 | 0.0282 | 0.0049 | 0.0305 | 0.0053 |
| | | | 0.3µm | [V] | 0.0545 | 0.0111 | 0.0198 | 0.0056 | 0.0343 | 0.0053 | 0.0301 | 0.0051 | 0.0339 | 0.0046 |
| | | | 0.5µm | [V] | 0.0562 | 0.0143 | 0.0224 | 0.0062 | 0.0354 | 0.0056 | 0.0329 | 0.0050 | 0.0365 | 0.0056 |
| | | | 0.7µm | [V] | 0.0592 | 0.0191 | 0.0209 | 0.0082 | 0.0377 | 0.0064 | 0.0353 | 0.0076 | 0.0352 | 0.0062 |
| | | | 0.9µm | [V] | 0.0516 | 0.0238 | 0.0243 | 0.0099 | 0.0358 | 0.0081 | 0.0343 | 0.0066 | 0.0373 | 0.0067 |
| | | | Boundary with steel sheet | [V] | 0.0534 | 0.0268 | 0.0258 | 0.0114 | 0.0362 | 0.0084 | 0.0379 | 0.0077 | 0.0366 | 0.0070 |
| | | Maximum value of intensity In_{Cu-MAX}, In_{Cr-MAX} | | [V] | 0.0628 | 0.0268 | 0.0258 | 0.0114 | 0.0396 | 0.0111 | 0.0399 | 0.0110 | 0.0412 | 0.0103 |
| | Ratio of intensity to that in steel sheet IR_{Cu-d}, IR_{Cr-d} | | | | | | | | | | | | | |
| | | Depth d from surface | 0.1µm | [-] | 0.856 | 0.304 | 0.680 | 0.508 | 0.901 | 0.612 | 0.754 | 0.675 | 0.782 | 0.705 |
| | | | 0.3µm | [-] | 0.961 | 0.370 | 0.666 | 0.510 | 0.996 | 0.716 | 0.804 | 0.705 | 0.870 | 0.614 |
| | | | 0.5µm | [-] | 0.990 | 0.477 | 0.753 | 0.564 | 1.027 | 0.760 | 0.879 | 0.685 | 0.937 | 0.747 |
| | | | 0.7µm | [-] | 1.044 | 0.638 | 0.702 | 0.744 | 1.094 | 0.857 | 0.943 | 1.049 | 0.903 | 0.832 |
| | | | 0.9µm | [-] | 0.910 | 0.795 | 0.816 | 0.905 | 1.037 | 1.097 | 0.917 | 0.912 | 0.955 | 0.905 |
| | | | Boundary with steel sheet | [-] | 0.942 | 0.894 | 0.869 | 1.044 | 1.050 | 1.136 | 1.014 | 1.052 | 0.939 | 0.945 |
| | | Ratio of maximum value of intensity IR_{Cu-MAX}, IR_{Cr-MAX} | | [-] | 1.108 | 0.894 | 0.868 | 1.044 | 1.147 | 1.500 | 1.066 | 1.513 | 1.056 | 1.383 |
| | | IR_{Cu-MAX}-IR_{Cu-boundary} | | [-] | 0.166 | - | -0.001 | - | 0.097 | - | 0.052 | - | 0.117 | - |
| | | IR_{Cu-MAX}-IR_{Cu-0.1d} | | [-] | 0.252 | - | 0.187 | - | 0.246 | - | 0.312 | - | 0.274 | - |
| | Ratio of intensity to that at depth of 0.5µm in standard sample IR_{Cu-d-vref}, IR_{Cr-d-vref} | | | | | | | | | | | | | |
| | | Depth d from surface | 0.1µm | [-] | 5.274 | 7.575 | 2.197 | 4.642 | 3.537 | 3.398 | 3.210 | 3.682 | 3.468 | 3.937 |
| | | | 0.3µm | [-] | 5.915 | 9.242 | 2.150 | 4.658 | 3.908 | 3.977 | 3.422 | 3.845 | 3.859 | 3.428 |
| | | | 0.5µm | [-] | 6.099 | 11.892 | 2.431 | 5.150 | 4.030 | 4.222 | 3.742 | 3.733 | 4.156 | 4.171 |
| | | | 0.7µm | [-] | 6.430 | 15.908 | 2.267 | 6.792 | 4.294 | 4.761 | 4.016 | 5.717 | 4.008 | 4.649 |
| | | | 0.9µm | [-] | 5.602 | 19.833 | 2.634 | 8.267 | 4.069 | 6.093 | 3.905 | 4.974 | 4.240 | 5.056 |
| | In_{Fe-0.1d}/(0.1*In_{Fe-MAX-ref}) | | | [-] | 3.840 | | 4.327 | | 4.477 | | 4.129 | | 5.351 | |
| | Thickness of Fe-Ni-Cu-Cr layer | | | [µm] | 1.65 | | 1.71 | | 1.47 | | 1.51 | | 1.76 | |
| | Depth from surface where Cu intensity reaches maximum | | | [µm] | 0.59 | | 1.71 | | 0.79 | | 1.35 | | 0.80 | |
| Evaluations | | | | | | | | | | | | | | |
| | Electrochemical measurement | | | [µA/cm²] | 0.161 | | 0.269 | | 0.175 | | 0.251 | | 0.227 | |
| | Contact resistance (150gf) | | | [mΩ] | 2.2 | | 2.3 | | 1.8 | | 2.0 | | 2.1 | |

**Table 2**

| | | | | | Ex. 6 | | Ex. 7 | | Ex. 8 | | Ex 9 | |
|---|---|---|---|---|---|---|---|---|---|---|---|---|
| | Type of substrate | | | | Low-carbon steel C | | Low-carbon steel C | | Low-carbon steel C | | Low-carbon steel D | |
| | Cu content in substrate | | | [mass%] | 0.1 or more and less than 0.2 | | 0.1 or more and less than 0.2 | | 0.1 or more and less than 0.2 | | 0.05 or more and less than 0.1 | |
| | Cr contert in substrate | | | [mass%] | 0.03 or more and less than 0.05 | | 0.03 or more and less than 0.05 | | 0.03 or more and less than 0.05 | | 0.03 or more and less than 0.05 | |
| | Thickness of Ni-plating layer | | | [µm] | 0.1 | | 0.3 | | 0.3 | | 0.3 | |
| | GDS | | | | Cu | Cr | Cu | Cr | Cu | Cr | Cu | Cr |
| | Cu intensity In_{Cu-steel}, Cr intensity In_{Cr-steel} in steel sheet | | | [V] | 0.0390 | 0.0075 | 0.0359 | 0.0081 | 0.0380 | 0.0075 | 0.0321 | 0.0068 |
| | Cu intensity In_{Cu-d}, Cr intensity In_{Cr-d} in outermost layer | | | | | | | | | | | |
| | | Depth d from surface | 0.1µm | [V] | 0.0361 | 0.0046 | 0.0278 | 0.0039 | 0.0334 | 0.0070 | 0.0250 | 0.0052 |
| | | | 0.3µm | [V] | 0.0387 | 0.0057 | 0.0330 | 0.0050 | 0.0344 | 0.0044 | 0.0278 | 0.0046 |
| | | | 0.5µm | [V] | 0.0404 | 0.0059 | 0.0335 | 0.0069 | 0.0361 | 0.0062 | 0.0277 | 0.0055 |
| | | | 0.7µm | [V] | 0.0377 | 0.0067 | 0.0338 | 0.0072 | 0.0357 | 0.0058 | 0.0286 | 0.0058 |
| | | | 0.9µm | [V] | 0.0342 | 0.0076 | 0.0384 | 0.0070 | 0.0386 | 0.0071 | 0.0277 | 0.0058 |
| | | | Boundary with steel sheet | [V] | 0.0354 | 0.0057 | 0.0362 | 0.0087 | 0.0356 | 0.0080 | 0.0309 | 0.0068 |
| | | Maximum value of intensity In_{Cu-MAX}, In_{Cr-MAX} | | [V] | 0.0444 | 0.0115 | 0.0434 | 0.0108 | 0.0429 | 0.0115 | 0.0378 | 0.0099 |
| | Ratio of intensity to that in steel sheet IR_{Cu-d}, IR_{Cr-d} | | | | | | | | | | | |
| | | Depth d from surface | 0.1µm | [-] | 0.927 | 0.617 | 0.774 | 0.483 | 0.879 | 0.938 | 0.777 | 0.775 |
| | | | 0.3µm | [-] | 0.993 | 0.756 | 0.920 | 0.617 | 0.905 | 0.588 | 0.867 | 0.678 |
| | | | 0.5µm | [-] | 1.036 | 0.793 | 0.933 | 0.857 | 0.950 | 0.824 | 0.864 | 0.814 |
| | | | 0.7µm | [-] | 0.967 | 0.895 | 0.942 | 0.889 | 0.940 | 0.775 | 0.891 | 0.850 |
| | | | 0.9µm | [-] | 0.878 | 1.022 | 1.070 | 0.864 | 1.016 | 0.947 | 0.863 | 0.860 |
| | | | Boundary with steel sheet | [-] | 0.909 | 0.764 | 1.007 | 1.080 | 0.937 | 1.065 | 0.964 | 1.003 |
| | | Ratio of maximum value of intensity IR_{Cu-MAX}, IR_{Cr-MAX} | | [-] | 1.139 | 1.534 | 1.208 | 1.336 | 1.130 | 1.529 | 1.178 | 1.464 |
| | | IR_{Cu-MAX}-IR_{Cu-boundary} | | [-] | 0.229 | - | 0.201 | - | 0.193 | - | 0.215 | - |
| | | IR_{Cu-MAX}-IR_{Cu-0.1d} | | [-] | 0.212 | - | 0.434 | - | 0.252 | - | 0.401 | - |
| | Ratio of intensity to that at depth of 0.5µm in standard sample IR_{Cu-d-vref}, IR_{Cr-d-vref} | | | | | | | | | | | |
| | | Depth d from surface | 0.1µm | [-] | 4.357 | 4.275 | 3.353 | 3617 | 4.025 | 6.525 | 3.011 | 4.858 |
| | | | 0.3µm | [-] | 4.669 | 5.233 | 3.984 | 4.625 | 4.148 | 4.092 | 3.359 | 4.250 |
| | | | 0.5µm | [-] | 4.871 | 5.492 | 4.041 | 6.417 | 4.354 | 5.733 | 3.345 | 5.100 |
| | | | 0.7µm | [-] | 4.543 | 6.200 | 4.078 | 6.658 | 4.305 | 5.392 | 3.452 | 5.325 |
| | | | 0.9µm | [-] | 4.129 | 7.075 | 4.635 | 6.475 | 4.656 | 6.592 | 3.344 | 5.392 |
| | In_{Fe-0.1d}/(0.1 *In_{Fe-MAX-ref}) | | | [-] | 5.763 | | 4.646 | | 5.358 | | 5.257 | |
| | Thickness of Fe-Ni-Cu-Cr layer | | | [µm] | 0.80 | | 1.00 | | 1.37 | | 1.50 | |
| | Depth from surface where Cu intensity reaches maximum | | | [µm] | 0.18 | | 0.80 | | 0.55 | | 0.76 | |
| | Evaluations | | | | | | | | | | | |
| | Electrochemical measurement | | | [µA/cm²] | 0.250 | | 0.217 | | 0.122 | | 0.171 | |
| | Contact resistance (150gf) | | | [mΩ] | 3.0 | | 2.3 | | 2.9 | | 1.7 | |

**Table 3**

| | | | | | Ex. 10 | | Ex. 11 | | Ex. 12 | |
|---|---|---|---|---|---|---|---|---|---|---|
| | Type of substrate | | | | Low-carbon steel C | | Low-carbon steel D | | Low-carbon steel B | |
| | Cu content in substrate | | | [mass%] | 0.1 or more and less than 0.2 | | 0.05 or more and less than 0.1 | | 0.01 or more and less than 0.05 | |
| | Cr content in substrate | | | [mass%] | 0.03 or more and less than 0.05 | | 0.03 or more and less than 0.05 | | 0.01 or more and less than 0.03 | |
| | Thickness of Ni-plating layer | | | [µm] | 0.75 | | 0.75 | | 0.75 | |
| | GDS | | | | Cu | Cr | Cu | Cr | Cu | Cr |
| | Cu intensity In_{Cu-steel}, Cr intensity In_{Cr-steel} in steel sheet | | | [V] | 0.0392 | 0.0084 | 0.0321 | 0.0078 | 0.0261 | 0.0102 |
| | Cu intensity In_{Cu-d}, Cr intensity In_{Cr-d} in outermost layer | | | | | | | | | |
| | | Depth d from surface | 0.1µm | [V] | 0.0215 | 0.0035 | 0.0207 | 0.0035 | 0.0143 | 0.0030 |
| | | | 0.3µm | [V] | 0.0222 | 0.0032 | 0.0209 | 0.0038 | 0.0162 | 0.0035 |
| | | | 0.5µm | [V] | 0.0263 | 0.0037 | 0.0236 | 0.0043 | 0.0166 | 0.0037 |
| | | | 0.7µm | [V] | 0.0297 | 0.0047 | 0.0243 | 0.0044 | 0.0178 | 0.0072 |
| | | | 0.9µm | [V] | 0.0297 | 0.0054 | 0.0258 | 0.0046 | 0.0201 | 0.0105 |
| | | | Boundary with steel sheet | [V] | 0.0369 | 0.0074 | 0.0319 | 0.0067 | 0.0262 | 0.0097 |
| | | Maximum value of intensity In_{Cu-MAX}, In_{Cr-MAX} | | [V] | 0.0427 | 0.0109 | 0.0392 | 0.0102 | 0.0311 | 0.0155 |
| | Ratio of intensity to that in steel sheet IR_{Cu-d}, IR_{Cr-d} | | | | | | | | | |
| | | Depth d from surface | 0.1µm | [-] | 0.550 | 0.419 | 0.645 | 0.444 | 0.547 | 0.291 |
| | | | 0.3µm | [-] | 0.566 | 0.388 | 0.651 | 0.484 | 0.621 | 0.340 |
| | | | 0.5µm | [-] | 0.671 | 0.442 | 0.735 | 0.551 | 0.635 | 0.366 |
| | | | 0.7µm | [-] | 0.758 | 0.558 | 0.756 | 0.569 | 0.683 | 0.708 |
| | | | 0.9µm | [-] | 0.758 | 0.648 | 0.805 | 0.592 | 0.768 | 1.026 |
| | | | Boundary with steel sheet | [-] | 0.943 | 0.883 | 0.995 | 0.864 | 1.004 | 0.954 |
| | | Ratio of maximum value of intensity IR_{Cu-MAX}, IR_{Cr-MAX} | | [-] | 1.090 | 1.305 | 1.223 | 1.312 | 1.192 | 1.521 |
| | | IR_{Cu-MAX}-IR_{Cu-boundary} | | [-] | 0.147 | - | 0.228 | - | 0.188 | - |
| | | IR_{Cu-MAX}-IR_{Cu-0.1d} | | [-] | 0.540 | - | 0.578 | - | 0.645 | - |
| | Ratio of intensity to that at depth of 0.5µm in standard sample IR_{Cu-d-vref}, IR_{Cr-d-vref} | | | | | | | | | |
| | | Depth d from surface | 0.1µm | [-] | 2.597 | 3.242 | 2.496 | 3.208 | 1.550 | 2.469 |
| | | | 0.3µm | [-] | 2.675 | 3.000 | 2.519 | 3.500 | 1.760 | 2.886 |
| | | | 0.5µm | [-] | 3.170 | 3.417 | 2.844 | 3.983 | 1.799 | 3.106 |
| | | | 0.7µm | [-] | 3.581 | 4.317 | 2.927 | 4.108 | 1.935 | 6.015 |
| | | | 0.9µm | [-] | 3.581 | 5.008 | 3.116 | 4.275 | 2.177 | 8.709 |
| | In_{Fe-0.1d}/(0.1*In_{Fe-MAX-ref}) | | | [-] | 3.259 | | 3.739 | | 3.247 | |
| | Thickness of Fe-Ni-Cu-Cr layer | | | [µm] | 1.89 | | 2.06 | | 2.19 | |
| | Depth from surface where Cu intensity reaches maximum | | | [µm] | 1.72 | | 1.74 | | 1.96 | |
| | Evaluations | | | | | | | | | |
| | Electrochemical measurement | | | [µA/cm²] | 0.17 | | 0.199 | | 0.334 | |
| | Contact resistance (150gf) | | | [mΩ] | 2 | | 1.7 | | 2.4 | |

**Table 4**

| | | | | | Comp. Ex. 1 | | Comp. Ex. 2 | | Comp. Ex. 3 | |
|---|---|---|---|---|---|---|---|---|---|---|
| | Type of substrate | | | | Low-carbon steel B | | Low-carbon steel C | | Low-carbon steel C | |
| | Cu content in substrate | | | [mass%] | 0.01 or more and less than 0.05 | | 0.1 or more and less than 0.2 | | 0.1 or more and less than 0.2 | |
| | Cr content in substrate | | | [mass%] | 0.01 or more and less than 0.03 | | 0.03 or more and less than 0.05 | | 0.03 or more and less than 0.05 | |
| | Thickness of Ni-plating layer | | | [µm] | 1.0 | | 0.75 | | 1.0 | |
| | GDS | | | | Cu | Cr | Cu | Cr | Cu | Cr |
| | Cu intensity In_{Cu-steel}, Cr intensity In_{Cr-steel} in steel sheet | | | [V] | 0.0251 | 0.0101 | 0.0383 | 0.0082 | 0.0375 | 0.0092 |
| | Cu intensity In_{Cu-d}, Cr intensity In_{Cr-d} in outermost layer | | | | | | | | | |
| | | Depth d from surface | 0.1µm | [v] | 0.0117 | 0.0016 | 0.0154 | 0.0020 | 0.0143 | 0.0027 |
| | | | 0.3µm | [V] | 0.0116 | 0.0013 | 0.0161 | 0.0026 | 0.0149 | 0.0024 |
| | | | 0.5µm | [V] | 0.0092 | 0.0012 | 0.0230 | 0.0032 | 0.0168 | 0.0025 |
| | | | 0.7µm | [V] | 0.0099 | 0.0015 | 0.0294 | 0.0048 | 0.0179 | 0.0032 |
| | | | 0.9µm | [V] | 0.0090 | 0.0010 | 0.0313 | 0.0060 | 0.0215 | 0.0036 |
| | | | Boundary with steel sheet | [V] | 0.0266 | 0.0091 | 0.0375 | 0.0084 | 0.0358 | 0.0083 |
| | | Maximum value of intensity In_{Cu-MAX}, In_{Cr-MAX} | | [V] | - | - | 0.0460 | 0.0108 | 0.0427 | 0.0120 |
| | Ratio of intensity to that in steel sheet IR_{Cu-d}, IR_{Cr-d} | | | | | | | | | |
| | | Depth d from surface | 0.1µm | [-] | 0.468 | 0.154 | 0.402 | 0.245 | 0.382 | 0.292 |
| | | | 0.3µm | [-] | 0.465 | 0.132 | 0.420 | 0.312 | 0.399 | 0.265 |
| | | | 0.5µm | [-] | 0.368 | 0.119 | 0.600 | 0.384 | 0.448 | 0.271 |
| | | | 0.7µm | [-] | 0.396 | 0.143 | 0.766 | 0.581 | 0.478 | 0.343 |
| | | | 0.9µm | [-] | 0.360 | 0.096 | 0.816 | 0.726 | 0.574 | 0.388 |
| | | | Boundary with steel sheet | [-] | 1.060 | 0.895 | 0.978 | 1.022 | 0.955 | 0.905 |
| | | Ratio of maximum value of intensity IR_{Cu-MAX}, IR_{Cr-MAX} | | [-] | - | - | 1.199 | 1.312 | 1.140 | 1.308 |
| | | IR_{Cu-MAX}-IR_{Cu-boundary} | | [-] | - | - | 0.221 | - | 0.185 | - |
| | | IR_{Cu-MAX}-IR_{Cu-0.1d} | | [-] | - | - | 0.797 | - | 0.758 | - |
| | Ratio of intensity to that at depth of 0.5µm in standard sample IR_{Cu-d-vref}, IR_{Cr-d-vref} | | | | | | | | | |
| | | Depth d from surface | 0.1µm | [-] | - | - | 1.859 | 1.867 | 1.724 | 2.483 |
| | | | 0.3µm | [-] | - | - | 1.942 | 2.383 | 1.803 | 2.258 |
| | | | 0.5µm | [-] | - | - | 2.776 | 2.933 | 2.026 | 2.308 |
| | | | 0.7µm | [-] | - | - | 3.545 | 4.433 | 2.162 | 2.917 |
| | | | 0.9µm | [-] | - | - | 3.775 | 5.542 | 2.594 | 3.300 |
| | In_{Fe-0.1d}/(0.1*In_{Fe-MAX-ref}) | | | [-] | | | 0.946 | | 1.300 | |
| | Thickness of Fe-Ni-Cu-Cr layer | | | [µm] | - | | - | | 2.42 | |
| | Depth from surface where Cu intensity reaches maximum | | | [µm] | - | | 3.28 | | 2.37 | |
| | Evaluations | | | | | | | | | |
| | Electrochemical measurement | | | [µA/cm²] | 0.405 | | 0.495 | | 1.00 | |
| | Contact resistance (150gf) | | | [mΩ] | - | | 2.0 | | 1.6 | |

**Table 5**

| | Amount of plating | | Initial heating step | Final heating step | | | | Thermal history Y (°C · sec) | W/Y (×10⁵) |
|---|---|---|---|---|---|---|---|---|---|
| | Thickness (µm) | Amount W deposited (g/m²) | Maximum heating rate (°C/sec) | Range of start temperature (°C) | Heating rate (°C/sec) | Range of goal temperature (°C) | Difference in tem perature (°C) | | |
| Ex. 1 | 0.50 | 4.45 | 4.96 | 660-694 | 0.37 | 695-729 | 40 | 57,920 | 7.7 |
| Ex. 2 | 0.50 | 4.45 | 4.96 | 660-694 | 0.37 | 695-729 | 40 | 57,920 | 7.7 |
| Ex. 3 | 0.50 | 4.45 | 8.38 | 660-694 | 0.6 | 730-764 | 60 | 49,605 | 9.0 |
| Ex. 4 | 0.50 | 4.45 | 9.50 | 660-694 | 2 | 765-799 | 100 | 35,079 | 12.7 |
| Ex. 5 | 0.50 | 4.45 | 9.50 | 660-694 | 1 | 765-799 | 100 | 54,879 | 8.1 |
| Ex. 6 | 0.10 | 0.89 | 8.00 | 660-694 | 0.8 | 695-729 | 40 | 25,888 | 3.4 |
| Ex. 7 | 0.30 | 2.67 | 8.00 | 660-694 | 0.8 | 695-729 | 40 | 25,888 | 10.3 |
| Ex. 8 | 0.30 | 2.67 | 8.63 | 695-729 | 1.8 | 800-834 | 90 | 37,424 | 7.1 |
| Ex. 9 | 0.30 | 2.67 | 8.63 | 695-729 | 1.8 | 800-834 | 90 | 37,424 | 7.1 |
| Ex. 10 | 0.75 | 6.68 | 8.63 | 695-729 | 1.8 | 800-834 | 90 | 37,424 | 17.8 |
| Ex. 11 | 0.75 | 6.68 | 8.63 | 695-729 | 1.8 | 800-834 | 90 | 37,424 | 17.8 |
| Ex. 12 | 0.75 | 6.68 | 8.63 | 695-729 | 1.8 | 800-834 | 90 | 37,424 | 17.8 |
| Comp. Ex. 2 | 0.75 | 6.68 | 8.00 | 660-694 | 0.8 | 695-729 | 40 | 25,888 | 25.8 |
| Comp. Ex. 3 | 1.00 | 8.90 | 8.63 | 695-729 | 1.8 | 800-834 | 90 | 37,424 | 23.8 |

As shown in Tables 1 to 3, in Examples 1 to 12, it was verified that when the intensities measured by radio frequency glow discharge optical emission spectrometry were compared between the standard nickel-plated steel sheet and the Ni-plated surface-treated steel sheets 1, the Ni-plated surface-treated steel sheets 1 had an alloy region where the Fe intensity and the Ni intensity were 10% or more of the maximum values of the intensities in the standard Ni-plated steel sheet, respectively, and the Cu intensity and the Cr intensity were higher than those in the Ni-plating layer in the standard Ni-plated steel sheet, respectively. From this, formation of an alloy region where all of Fe, Ni, Cu, and Cr were considered to present, that is, formation of the Fe-Ni-Cu-Cr layer 3 was verified. Specifically, it was apparent that the above-mentioned alloy region was present at at least depths of 0.1 µm, 0.3 µm, and 0.5 µm, and it was verified that for both Cu and Cr, the ratios of intensities thereof at the respective depths to those in the standard Ni-plated steel sheet were 2.0 or more, that is, the intensity ratios of 2 times or higher were obtained. In Examples 1 to 12, it was verified that the intensity ratio IR_{Cu-0.1d} of the intensity at a depth of 0.1 µm to that in steel sheet 2 was 0.5 or more and 3.0 or less. In Examples 1 to 12, it was also verified that the intensity ratio IR_{Cu-0.5d} of the intensity at a depth of 0.5 µm to that in the steel sheet 2 was 0.5 or more, and IR_{Cr-0.5d} was 0.20 or more.

As shown in Tables 1 to 3, the Ni-plated surface-treated steel sheets 1 including the Fe-Ni-Cu-Cr layer 3 had a small current (where the current is attributed to elution of a metal such as Fe at 4.1 V corresponding to overdischarge), and had high electrolyte solution resistance during overdischarge (Examples 1 to 12). In particular, the Ni-plated surface-treated steel sheet 1 in Example 1 had a current about 60% smaller than that in Comparative Example 1 shown in Table 4, and had particularly high electrolyte solution resistance. Compared to the Ni-plated surface-treated steel sheet 2 in Example 2, in the Ni-plated surface-treated steel sheet 1 in Example 1, the Cr intensity ratios IR_{Cr-d-vref} of the Cr intensities at the respective depths to the Cr intensity In_{Cr-0.5d-ref} at a depth of 0.5 µm of the standard sample was higher, while the contact resistance was about the same. This is considered because the Fe-Ni-Cu-Cr layer 3 in Example 1 contained a large amount of Cr and also a sufficient amount of Cu, which was diffused from the steel sheet 2.

Furthermore, in Example 1, it was verified that the intensity ratio IR_{Cu-0.5d} of the Cu intensity at a depth of 0.5 µm to that in the steel sheet 2 was 0.5 or more. In Example 1, the difference in Cu intensity, i.e., IR_{Cu-MAX}-IR_{Cu-0.1d} was more than 0.05 and satisfied the relation represented by Expression (1) above. At the same time, the difference in Cu intensity, i.e., IR_{Cu-MAX}-IR_{Cu-boundary} was more than 0.05, and satisfied the relation represented by Expression (2) above. In other words, in Example 1, it was verified that a copper-enriched region was present in the intermediate region of the Fe-Ni-Cu-Cr layer 3. This can also be verified from that the depth at which the Cu intensity reached the maximum value in Example 1 was 0.59 µm, which was shallower than the boundary between the layer 3 and the steel sheet 2, and that unlike Example 2 and Comparative Example 1, after the Cu intensity reached the maximum, the Cu intensity reduced toward the boundary between the layer 3 and the steel sheet 2 in the chart in Example 1, as shown in Fig. 3(b). Moreover, in Example 1, the ratio IR_{Cu-d-vref} of the Cu intensity at a depth in the entire range of 0.1 µm to 0.5 µm from the surface to that in the standard sample was 2.3 or more and 10 or less, which was greater than in Example 2. From this, it can be said that the absolute amount of Cu in the vicinity of the surface layer in Example 1 was larger than that in Example 2. The Ni-plated surface-treated steel sheet 1 in Example 1 had a current smaller than that in Example 2 (where the current is attributed to elution of metal such as Fe at 4.1 V corresponding to overdischarge), and had particularly higher electrolyte solution resistance during overdischarge than that in Example 2. It is considered that such results were obtained in Example 1 because the carbon steel used in Example 1 contained a particularly larger amount of Cu than that in the carbon steel used in Example 2.

As shown in Examples 3 to 5, Ni-plated surface-treated steel sheets 1 having high electrolyte solution resistance were obtained when the carbon steel C containing 0.1% by weight or more and less than 0.2% by weight of Cu and 0.03% by weight or more and less than 0.05% by weight of Cr was used.

As shown in Table 2, even when the amount of Ni deposited by Ni-plating was relatively small, Ni-plated surface-treated steel sheets 1 having high electrolyte solution resistance were obtained when a carbon steel containing a predetermined amount of Cu and a predetermined amount of Cr was used as the original plate to form the Fe-Ni-Cu-Cr layer 3, and the intensity ratio IR_{Cu-0.1d} of the intensity at a depth of 0.1 µm and that in the steel sheet 2 fell within 0.5 or more and 3.0 or less (Examples 6 to 9).

As shown in Table 3, when the amount of Ni deposited by Ni-plating was relatively large, the ratio IR_{Cu-d} of the Cu intensity to that in the steel sheet and the ratio IR_{Cu-d-vref} of the Cu intensity to that in the standard sample were relatively small in the vicinity of the surface layer in particular (Examples 10 to 12). However, apparently from comparison to Comparative Example 2 shown in Table 4, even when the amount of Ni deposited by Ni-plating was relatively large, the electrolyte solution resistance was improved by forming the Fe-Ni-Cu-Cr layer 3 and controlling the ratio IR_{Cu-0.1d} of the intensity at a depth of 0.1 µm to that in the steel sheet 2 to fall within 0.5 or more and 3.0 or less.

In contrast, the Ni-plated steel sheet in which formation of the Fe-Ni-Cu-Cr layer was not verified had a large current (where the current is attributed to elution of metal such as Fe at 4.1 V corresponding to overdischarge), and had inferior electrolyte solution resistance (Comparative Example 1).

Even in the case where the Fe-Ni-Cu-Cr layer 3 was formed, the electrolyte solution resistance was inferior when the ratio IR_{Cu-0.1d} of the intensity at a depth of 0.1 µm to that in the steel sheet 2 was less than 0.5, and Cu insufficiently diffused into the vicinity of the surface layer (Comparative Examples 2, 3).

### REFERENCE SIGNS LIST

1...Ni-plated surface-treated steel sheet
2...steel sheet
3...Fe-Ni-Cu-Cr layer

## Claims

1. A Ni-plated surface-treated steel sheet comprising a steel sheet formed from a carbon steel, and an Fe-Ni-Cu-Cr layer formed on at least one surface of the steel sheet,
wherein when Cu intensity is continuously measured depthwise from the surface of the Fe-Ni-Cu-Cr layer by radio frequency glow discharge optical emission spectrometry (GDS), a ratio IR_{Cu-0.1d} of a Cu intensity In_{Cu-0.1d} at a depth of 0.1 µm from the surface to a Cu intensity In_{Cu-steel} in the steel sheet is 0.5 or more and less than 3.0.

2. The Ni-plated surface-treated steel sheet according to claim 1, wherein when Cu intensity is continuously measured depthwise from the surface of the Fe-Ni-Cu-Cr layer by radio frequency glow discharge optical emission spectrometry (GDS), a ratio IR_{Cu-0.5d} of a Cu intensity In_{Cu-0.5d} at a depth of 0.5 µm from the surface to the Cu intensity In_{Cu-steel} in the steel sheet is 0.5 or more and less than 3.0.

3. The Ni-plated surface-treated steel sheet according to claim 1 or 2, wherein when Cr intensity is continuously measured depthwise from the surface of the Fe-Ni-Cu-Cr layer by radio frequency glow discharge optical emission spectrometry (GDS), a ratio IR_{Cr-0.5d} of a Cr intensity In_{Cr-0.5d} at a depth of 0.5 µm from the surface to a Cr intensity In_{Cr-steel} in the steel sheet is 0.2 or more and less than 2.0.

4. The Ni-plated surface-treated steel sheet according to any one of claims 1 to 3, wherein when Cr intensity is continuously measured depthwise from the surface of the Fe-Ni-Cu-Cr layer by radio frequency glow discharge optical emission spectrometry (GDS), a ratio IR_{Cr-0.1d} of a Cr intensity In_{Cr-0.1d} at a depth of 0.1 µm from the surface to the Cr intensity In_{Cr-steel} in the steel sheet is 0.2 or more and less than 2.0.

5. The Ni-plated surface-treated steel sheet according to any one of claims 1 to 4, wherein when Cu intensity is continuously measured depthwise from the surface of the Fe-Ni-Cu-Cr layer by radio frequency glow discharge optical emission spectrometry (GDS), a ratio IR_{Cu-0.3d to 0.7d} of a Cu intensity In_{Cu-0.3d to 0.7d} at a depth from 0.3 to 0.7 µm from the surface to the Cu intensity In_{Cu-steel} in the steel sheet is 0.5 or more and 3.0 or less.

6. The Ni-plated surface-treated steel sheet according to any one of claims 1 to 5, wherein the Fe-Ni-Cu-Cr layer has a Cu-enriched region.

7. The Ni-plated surface-treated steel sheet according to any one of claims 1 to 6, wherein when Cu intensity is continuously measured depthwise from the surface of the Fe-Ni-Cu-Cr layer by radio frequency glow discharge optical emission spectrometry (GDS), a ratio IR_{Cu-MAX} of a maximum Cu intensity In_{MAX} at a depth up to the steel sheet to the Cu intensity In_{Cu-steel} in the steel sheet is more than 0.8 and 3.0 or less.

8. The Ni-plated surface-treated steel sheet according to any one of claims 1 to 7, wherein the steel sheet is a low-carbon steel or an extremely low-carbon steel.

9. The Ni-plated surface-treated steel sheet according to any one of claims 1 to 8, wherein the steel sheet is a low-carbon steel,
the content of Cu in the steel sheet is 0.01% by weight to 1.0% by weight, and
the content of Cr in the steel sheet is 0.01% by weight to 1.0% by weight.

10. A battery container comprising the Ni-plated surface-treated steel sheet according to any one of claims 1 to 9.
